Europäisches Patentamt

European Patent Office

Office européen des brevets

(19)

(11) Publication number: **0 402 911 A2**

## (12) EUROPEAN PATENT APPLICATION

(21) Application number: **90111226.8**

(51) Int. Cl.5: **G06F 3/16**

(22) Date of filing: **13.06.90**

(30) Priority: **14.06.89 JP 149628/89**

(43) Date of publication of application:
**19.12.90 Bulletin 90/51**

(84) Designated Contracting States:
**AT BE CH DE DK ES FR GB GR IT LI LU NL SE**

(71) Applicant: **HITACHI, LTD.**
**6, Kanda Surugadai 4-chome**
**Chiyoda-ku, Tokyo 100(JP)**

(72) Inventor: **Yabuuchi, Shigeru**
**2196-16, Hirai, Hinodemachi**
**Nishitama-gun, Tokyo(JP)**

(74) Representative: **Strehl, Schübel-Hopf,**
**Groening**
**Maximilianstrasse 54 Postfach 22 14 55**
**D-8000 München 22(DE)**

(54) **Information processing system.**

(57) An information processing system has a multiwindow display which is controlled so as to generate a plurality of windows visually expressing operation contents for voice processing of annotating voice messages to a document. The operation contents are displayed hierarchically in several separate windows. Recording/playback condition is registered every vocal message and the condition can be visually set and altered. Also, the condition of the recording mode can be adjusted in conformity with environment of the system.

FIG. 1

EP 0 402 911 A2

# INFORMATION PROCESSING SYSTEM

## BACKGROUND OF THE INVENTION

The present invention relates to an information processing system which processes multi-media documents each containing characters, patterns, pictures and/or voices, particularly, to an information processing system suitable for adding voice notes to a document which is displayed on a screen and for playing back the added voice notes.

For example, a system comprising a voice station manufactured by SYDIS Inc. (Robert T. Nicholson: "Integrating Voice in the Office Word", BYTE magazine, December 1983) can append voice messages or notes to an editable document. In this system, the contents of a vocal message are displayed on a highlighted line in a window which is separate from the document, and the length of the voice, the phonic parts and aphonic parts (pauses) of the vocal message, etc. are visually displayed. In addition, the voice messages are edited using soft keys which are displayed in an operation menu column common to the system. The soft keys include the same operation commands as those of a tape recorder, i.e. there are "record", "stop", "play", "rewind" and "fast forward" functions available. Further, Nos. are displayed for respective vocal sentences in the window, and vocal messages can be inserted, deleted and additionally recorded in a vocal-sentence unit by successively designating the Nos. with the keys. Besides, an icon abstracted from a speaker is affixed to the place of the document bearing the vocal notes, and the window is opened when the icon is pointed to.

With the prior-art voice station system, the vocal message displayed in one window can be handled using the operation commands. Since, however, the operation commands are the same as those used in a tape recorder operating sequentially, voices desired to be heard cannot be randomly accessed in a short time. Moreover, the voices can be edited only in vocal-sentence units. Further, the system does not have functions which permit the recording and playback of voices to be flexibly set and altered. For these reasons, the system is inconvenient for the processing of voice in documents and has had its applications limited.

## SUMMARY OF THE INVENTION

It is a main object of the present invention to provide an information processing system which is easier to use and which can efficiently handle voice.

It is another object of the present invention to provide an information processing system in which voice processing for voice recording, playback, etc. for voice annotation of a document and document processing for generation, editing, accumulation, etc. are efficiently performed.

It is still another object of the present invention to provide an information processing system which can facilitate and quicken erasure, movement, insertion, copying, playback, etc. of vocal data of annotated voices in a document.

A further object of the present invention is to provide an information processing system which provides a substantial increase in the capacity of storing vocal data and which can use the storage of the vocal data as effectively as possible.

Still a further object of the present invention is to provide an information system which can perform random and fine vocal editing for annotated voices in a document.

In accordance with the present invention, an information processing system comprises a multiwindow display which is controlled so as to generate a plurality of windows visually expressing operation contents for voice processing and the operation contents are displayed hierarchically in several separate windows. It comprises a voice processing storage which operates to register a recording/playback condition for every vocal message (hereinbelow, simply termed "voice") and the condition can be visually set and altered. Also, the condition of the recording mode can be adjusted in conformity with the environment of the system.

As one of the features of the present invention, the system comprises a voice processor which controls the encoding of voice and the decoding of encoded voice separately from information processing for the editing of a document, the control of multiwindow display, etc. Further, steps are taken for preventing a conflict between an access from the information processor to the voice processing storage and an access from the voice processor to the voice processing storage, and for permitting accesses from both the information processor and the voice processor. Thus, the processing of a document by the information processor and the recording or playback of voice, or the like, by the voice processor can be performed in parallel in real time.

Another feature of the present invention resides in the fact that in a case where the voice processing storage has an insufficient capacity for storing vocal data, different vocal data is saved in the voice processing storage or file for storing documents in real time, while certain vocal data is being recorded, whereby the storage capacity required for recording is dynamically secured.

A further feature of the present invention resides in the structure of the voice processing storage which comprises a vocal RAM file for storing and managing a plurality of different types of vocal data items having different contents.

Still, a further feature of the present invention resides in the fact that the vocal data can be managed in a phrase unit shorter than a sentence unit, the operating command menus are displayed in the respective windows for voice processing so that operation commands can be selected and a plurality of voices stored separately can be multiplexed and played back, the sound of voices recorded thus or a synthesized sound can be emitted in a stereo aspect, and so forth.

## BRIEF DESCRIPTION OF THE DRAWINGS

The present invention may be better understood and its numerous objects and advantages will become apparent from a more detailed description referring to the accompanying drawings, wherein reference numerals refer to like elements in the several figures, and in which:

Fig. 1 is a schematic block diagram showing an embodiment of the present invention;

Fig. 2 is a schematic diagram showing a voice annotating method which employs a multiwindow display;

Fig. 3 is a diagram showing an editing command menu;

Fig. 4 is a diagram showing a voice editing window;

Fig. 5 is a diagram showing the storage structure of a vocal RAM file;

Fig. 6 is a diagram showing the area management of the vocal RAM file;

Fig. 7 is a diagram showing the storage structure of a vocal RAM file;

Fig. 8 is a diagram showing the process of detecting an aphonic section;

Fig. 9 is a diagram showing the storage structure of a frame of voice data;

Fig. 10 is a diagram showing a method of displaying a frame of voice in an editing window;

Fig. 11 is a diagram showing a phrase voice display region management table;

Fig. 12 is a diagram showing a playback pop-up menu;

Fig. 13 is a diagram showing voice multiplexing processing;

Fig. 14 is a diagram showing the process of heightening the pitch of a voice;

Fig. 15 is a diagram showing the process of lowering the pitch of a voice;

Fig. 16 is a diagram showing an attribute control window;

Fig. 17 is a diagram showing an insertion window;

Fig. 18 is a diagram showing a vocal RAM file status window;

Fig. 19 is a diagram showing an icon example 2;

Fig. 20 is a diagram showing an icon example 3;

Fig. 21 is a diagram showing a pop-up menu for handling a voice already afforded;

Fig. 22 is a diagram showing the process of annotating another recorded voice to a document;

Fig. 23 is a diagram showing the process of copying another recorded voice under a different file name;

Fig. 24 is a diagram showing the process of copying another phrase voice;

Fig. 25 is a diagram showing encoding processing;

Fig. 26 is a diagram showing decoding processing;

Fig. 27 is a diagram for explaining the automatic allocation of the editing window;

Fig. 28 is a diagram showing the process of automatically allocating the editing window;

Fig. 29 is a diagram showing an arrangement for providing a stereo sound mode;

Fig. 30 is a front view showing an arrangement of acoustic output devices;

Figs. 31A and 31B are views for explaining the principle of a stereo mode realizing method;

Fig. 32 is a block diagram showing a detailed arrangement for performing stereo mode processing;

Fig. 33 is a block diagram showing the construction of an embodiment which serves to bring a plurality of sounds into a stereo relationship;

Figs. 34 and 35 are explanatory diagrams showing an example of the application of a stereo output in the information processing system of the present invention; and

Fig. 36 is a block diagram showing the construction of another embodiment which serves to realize a stereo sound mode.

## DESCRIPTION OF THE PREFERRED EMBODIMENTS

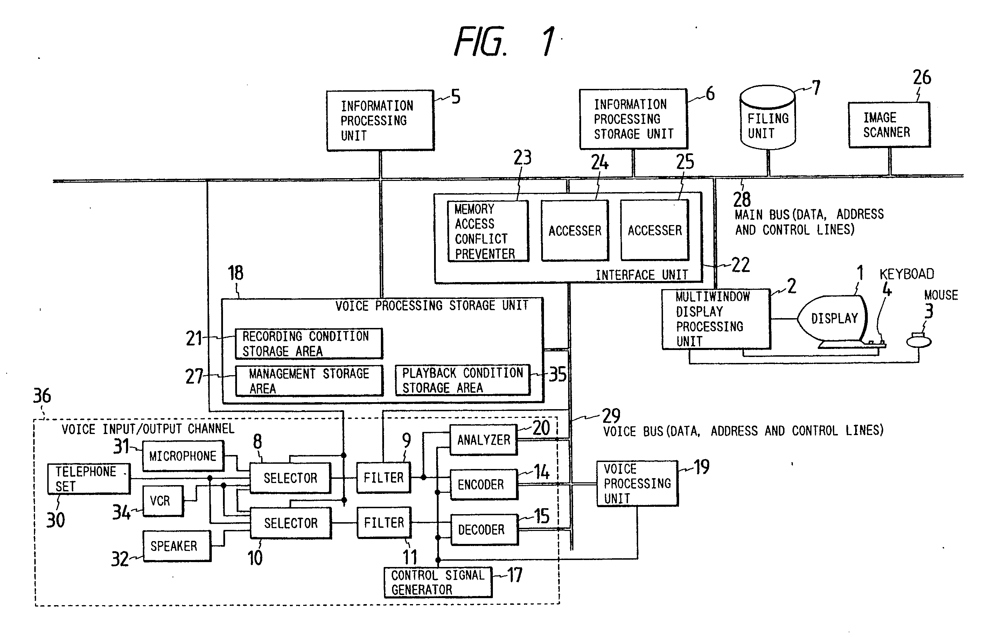

Now, the present invention will be described with reference to the drawings. Fig. 1 is a diagram showing one embodiment of the present invention. The information processing system shown in Fig. 1 comprises a display unit 1 for displaying characters, patterns and pictures; a multiwindow display processing unit 2 for dividing the screen of the display unit 1 into a plurality of partial regions (windows) and operating the windows as independent displays; a mouse 3 for inputting a position on the screen of the display unit 1; a keyboard 4 for inputting characters; an image scanner 26 for inputting pictures; an information processing unit 5 for performing the generation, editing, accumulation etc. of documents, while the data items received as inputs from the mouse 3, keyboard 4 and image scanner 26 are being displayed on the display unit 1 via the multiwindow display processing unit 2; an information processing storage unit 6 for storing various data items (including also the documents) for use in the information processing; a filing unit 7 for accumulating the documents; a selector 8 for selecting any of various inputs from voice input devices, such as a microphone 31, a telephone set 30 and a VCR 34; a filter 9 for amplifying and frequency-filtering an analog voice signal received from the selector 8; an encoder 14 for sampling the output signal of the filter 9 and for converting it into a digital value; a decoder 15 for restoring an encoded voice signal into an original analog signal; a filter 11 for amplifying and frequency filtering the output signal of the decoder 15; a selector 10 for selecting any of various voice output devices, such as a loudspeaker 32 and the telephone set 30 or VCR 34; a control signal generator 17 for generating control signals for repeating the encoding and the decoding every predetermined number of cycles (frames); a voice processing storage unit 18, for storing the encoded voice signal etc.; a voice processing unit 19 for controlling the operations of inputting and outputting voice; a condition memory 21 for storing recording conditions; a voice analyzer 20 for analyzing the output signal of the filter 9 for amplifying and frequency-filtering the analog voice signal, thereby to deliver the level of the voice and the decided result of a voiced state or a voiceless state every predetermined number of cycles, as mentioned above; management storage area 27 for storing management information for the plurality of different voice data items; an interface unit 22 which is configured of a circuit 23 for preventing a conflict between an access from the information processing unit 5 to the voice processing storage unit 18 and an access from the voice processing unit to the voice processing unit 18; an accesser 24 for an access from the information processing unit 5 to the voice processing unit 19; and accesser 25 for an access from the voice processing unit 19 to the information processing unit 5; and condition memory 35 for storing voice playback conditions within the voice processing storage unit. The various elements are coupled by a main bus or a voice bus which consists of data, address and control lines. In particular, all the elements for the voice processing shall be collectively called the "voice input/output channel 36". Incidentally, the information processing unit 5 and the voice processing unit 19 each shall be constructed of a conventional microprocessor.

The multiwindow display processing unit 2 realizes a multiwindow mode of operation by operating as a virtual terminal which has a logical screen larger than the actual screen of the display unit 1, and the windows which are displayed on the actual screen of the terminal are controlled in correspondence with each other. Concretely, the multiwindow display processing unit 2 operates as a virtual terminal and edits a logical virtual screen in accordance with the instruction of the information processing unit 5. In addition, it extracts a part of the virtual screen as a field of view and displays the extracted part as a window on the screen of the display unit 2 operating as the actual terminal. Further, it performs such functions as moving the window and altering the size thereof on the screen of the actual terminal and moving the field of view on the virtual plane, and it supplies the information processing unit 5 with an input from the position input device 3 (mouse) with which an operator for the virtual terminal enters the position on the screen of the display or from the keyboard 4 with which he/she enters a character. The information processing unit 5 can freely set the make-up and size of the virtual screen, and it can display characters, patterns and pictures coexistingly and bring the plurality of windows into the display operations simultaneously.

Regarding the information processing system of the present invention stated above, an expedient for adding voice to a document and an expedient for visually editing the voice will be described below in detail.

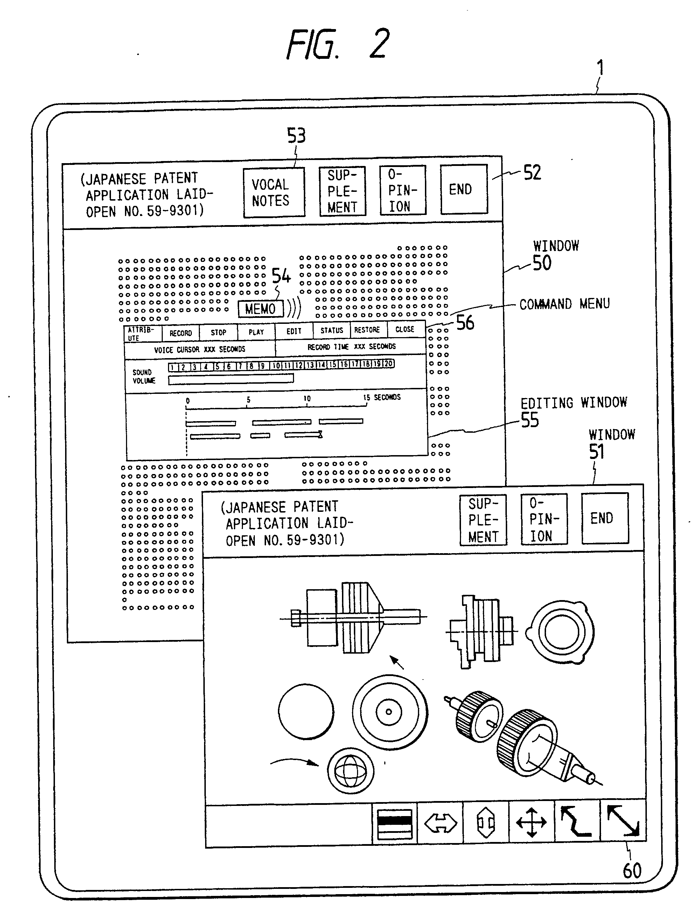

First, a case of annotating voice on a document will be described with reference to Fig. 2. Fig. 2 shows a page from a Japanese Gazette, which is laid opened for public inspection, displayed on the screen. It is now assumed that two windows 50 and 51 as shown in Fig. 2 are presented on the screen of the display unit 1. It is also assumed that the document and a picture are displayed in the respective windows, and that a command menu for editing the document displayed in the window 50 is indicated in a region 52 within the window 50. The command menu is generated under the control of the information processing unit 5, and is indicated in the window 50. Under such a state, the operator points to the place on the document to be endowed with the voice, by the use of the position input device 3 (mouse), and he/she subsequently specifies "vocal notes" 53 in the command menu column by the use of the mouse 3. Then, these items of positional information are transferred to the information processing unit 5 by the multiwindow display processing unit 2. In generating the command menu column, the information processing unit 5 stores the information items of the respective areas of the command menu column appearing on the virtual screen in the storage unit 6 for information processing. The information processing unit 5 controls the information processing storage unit 6 so as to read out the area information items of the command menu column and subjects the read-out information to matching with the above positional information, thereby to recognize the specified command, namely, the "vocal notes" command. Upon deciding that the specified command is the "vocal notes" command, the information processing unit 5 controls the multiwindow display processing unit 2 so as to display an icon 54 indicative of the place of the voice at the position designated first. Incidentally, the operation in which the multiwindow display processing unit 2 is controlled to present any display on the screen of the display unit 1 shall hereinafter be simply expressed as "displaying .....".

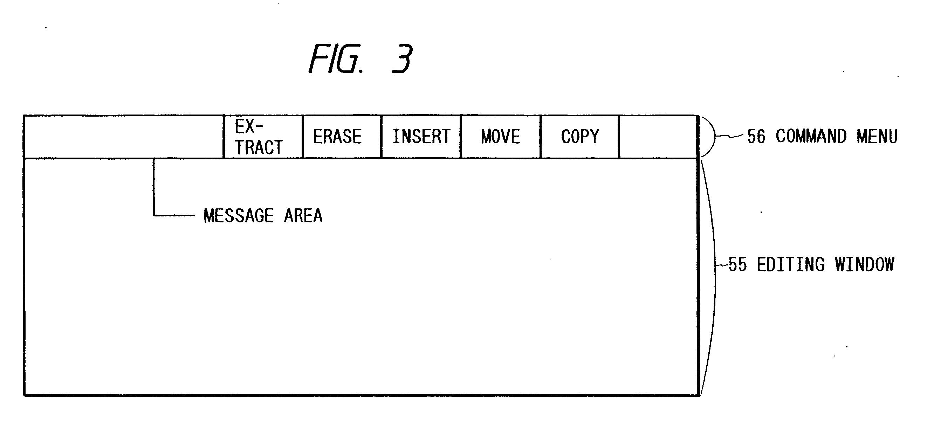

Subsequently, the information processing unit 5 automatically allocates and displays a vocal editing window 55 on the basis of the information of the first designated position. The automatic allocation will be described later. In the known example of the prior art, commands for editing are indicated in an operation menu column which is shared by a system. In contrast, according to the present invention, an editing command menu column 56 is comprised within the editing window 55 as shown in Fig. 2. In one embodiment of the present invention, there are the commands of "attribute", "record", "stop", "playback", "edit", "status", "restore" and "close" (hereinafter, commands shall be mentioned with enclosures " "). The command "edit" is a progressive menu, and when it is selected by the procedure of steps described before, the information processing unit 5 alters the display contents of the command menu column 56 and displays "extract", "erase", "insert", "move" and "copy" as shown in Fig. 3.

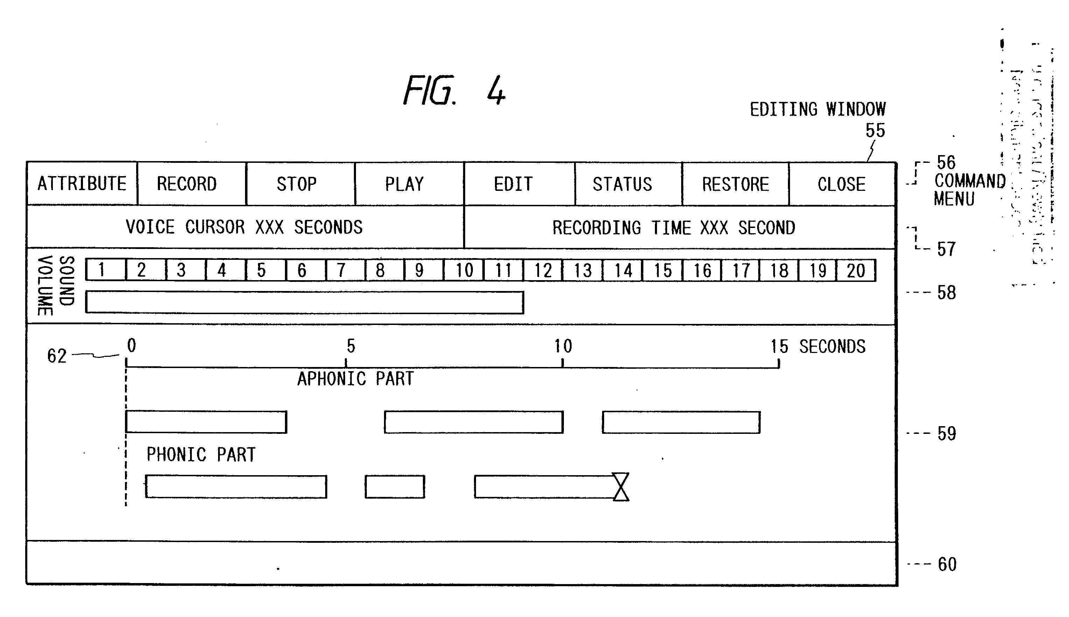

A practicable embodiment of the vocal editing will be further described with reference to Fig. 4 which shows the editing window 55 in Fig. 2 on an enlarged scale.

As shown in Fig. 4, the editing window 55 includes five display regions. The region 57 is a region in which a voice cursor 61 and a recording time with the head of vocal data set at the point of time 0 are displayed in real time (in seconds). The voice cursor time indicates the position of the voice cursor 61 on the vocal data. The region 58 is a sound volume display region, which displays dynamically visualized sound volumes during recording and playback. Although, in the embodiment shown in Fig. 4, the level of the sound volume is presented in terms of the length of a bar graph, it can also be expressed by different colors of quantized and divided regions. In addition, the region 59 is a region which displays the vocal data being recorded and a time scale 62. The time scale 62 is displayed at the uppermost line. The vocal data is expressed in the shape of a lateral bar which extends in parallel with the time scale 62. In the lateral bar only phonic parts (phrases) are displayed, and aphonic parts (pauses) are blanked. The region 60 is a window operation menu display region, which displays such commands as moving the window, altering the size of the window, and moving the field of view on the virtual plane.

At the point of time at which the command "vocal notes" 53 has been selected by the operation, the information processing unit 5 does not display the contents shown in Fig. 4 as they are. The voice cursor and the recording time in the region 57 are set at 0 second, and nothing is displayed as the sound volume in the region 58 because the value thereof is 0. Further, nothing except the time scale 62 is displayed in the region 55. The information processing unit 5 makes ready for the recording of a new voice simultaneously with such initial screen display of the editing window. First, the information processing unit 5 issued an instruction for initializing the voice input/output channel 36 for the new recording, to the voice processing unit 19 through the accesser 24. Upon receiving the initialization instruction, the voice processing unit 19 issues reset signals to the respective elements of the voice input/output channel 36, thereby to bring these elements into a reset status. When the voice processing unit 19 has received reset end signals from the respective elements via the voice bus, it informs the information processing unit 5 of the end of the resetting through the accesser 25.

Subsequently, the information processing unit 5 performs processing for securing a memory area for storing recorded voice. Here will be explained a method and means for storing and managing vocal data in an embodiment of the present invention.

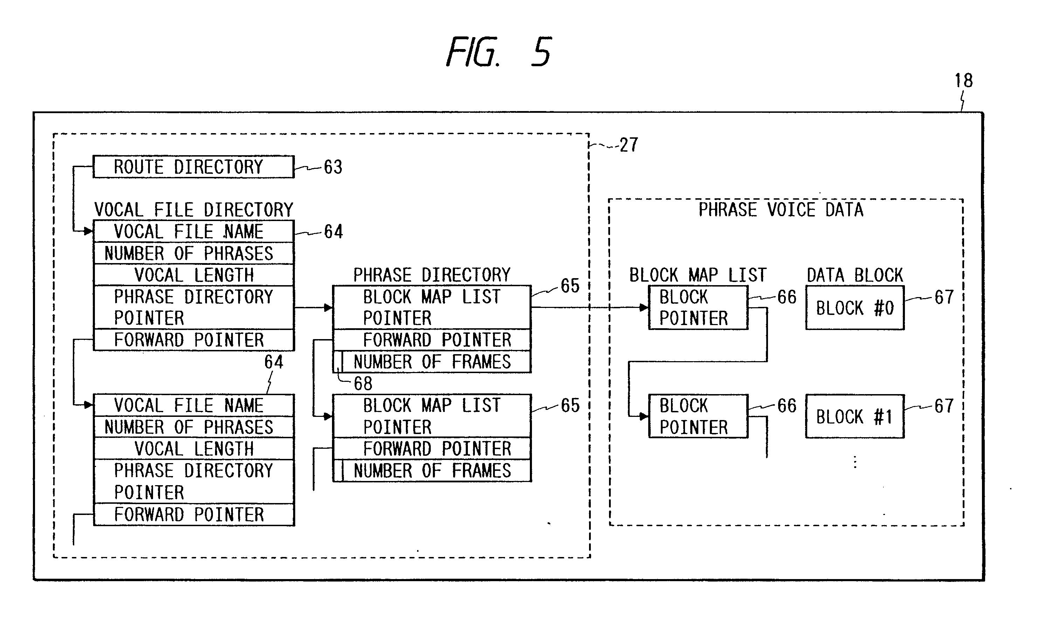

The voice processing storage unit 18 will be first referred to. Encoded vocal data obtained in such a way that the voice processing unit 19 controls the voice input/output channel 36 in accordance with steps to be described later, is stored in a vocal RAM file within the voice processing storage unit 18. In the embodiment of the present invention, the vocal RAM file having a storage structure illustrated in Fig. 5 is provided in order to facilitate and increase the speed of erasure, movement, insertion, copying, playback etc. of vocal data and to use the storage means as effectively as possible. A memory area indicated at numeral 27 in the figure is a means for storing management information for a plurality of vocal data items having different contents. With a start point at one route directory 63, the vocal data items are stored by a tree-shaped hierarchic structure composed of vocal file directories 64, phrase directories 65, block map lists 66 and data blocks 67. File information items for one recorded vocal data (a vocal file name, the number of phrases, a vocal length, a phrase directory pointer, and a forward pointer) are stored in each vocal file directory 64. The forward pointer points to the next vocal file directory.

All the vocal files can be retrieved by tracing the route directories 63. Each phrase directory 65 consists of a pointer for indicating the place of phrase voice data, a forward pointer for connecting this phrase directory to the phrase directory 65 stored in the identical file, and the number of frames. The phrase directory pointer points to the head phrase in the file, and the vocal data items of all the phrases can be accessed in conformity with this pointer. A memory area 68 in the phrase directory 65 registers whether or not the phrase voice data indicated by the pertinent phrase directory is stored in the information processing storage unit 6 or the filing unit 7. The substance of the vocal data is stored by the block map list and the data block. The data block denotes one small area obtained in such a way that a predetermined memory area in the voice processing storage unit 18 is divided by a certain fixed size. In a case where the phrase voice data cannot be stored in one data block, it is dividedly stored in at least two of the data blocks. The block map lists connect the data blocks in which the phrase voice data is dividedly stored on this occasion.

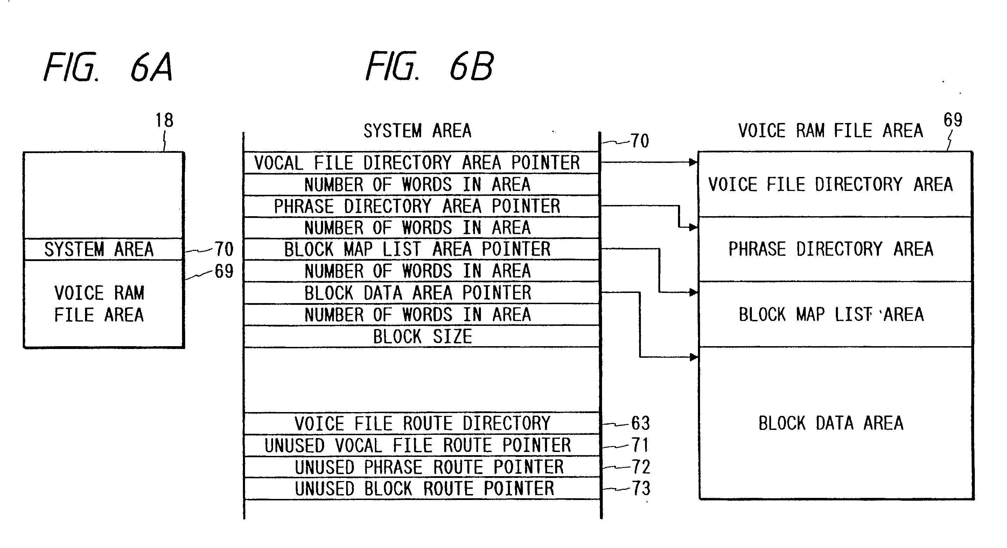

The storage area of the vocal RAM file 69 thus far described is secured within the voice processing storage unit 18 in a layout shown in Fig. 6 under the control of the voice processing unit 19 when the system is started up. At this time, the voice processing unit 19 secures the various areas of the vocal RAM file as indicated in Fig. 6 in accordance with the management information which is stored in a system area 70 within the voice processing storage unit 18. In addition, it generates the directories, data map lists and data blocks shown in Fig. 5 within the corresponding areas, and it connects the directories and lists of the same groups through pointers and also connects the head directories and lists of the respective groups through unused directory pointers and list pointers within the system area 70.

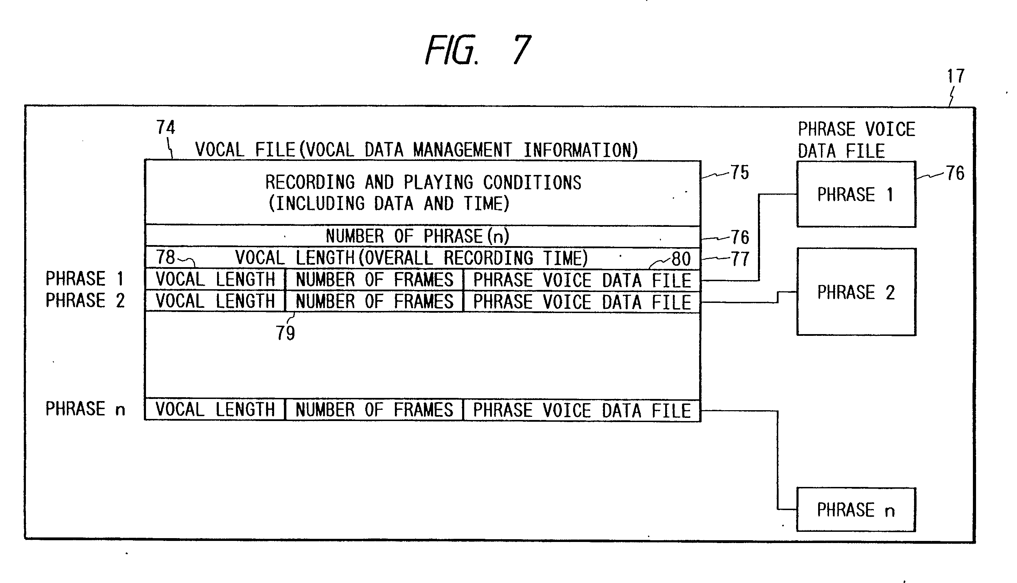

Meanwhile, a method and apparatus for storing vocal data in the filing unit 7 are illustrated in Fig. 7. The information processing unit 5 stores the vocal data by the use of two sorts of files. One of them is a vocal file 74 for storing the management information of the vocal data, while the other is a phrase voice data file 76 for storing phrase voice data. The vocal file 74 includes an area 75 for storing recording/playback conditions, an area 76 for storing the number of phrases, an area 77 for storing a vocal length, areas 78 for storing the vocal lengths of the phases, areas 79 for storing the numbers of frames constituting the phrases, and areas 80 for storing vocal data file names. Unlike the vocal RAM file stated before, the phrase voice data file 76 stores and phrase voice data collectively in a single file. These files in the filing unit 7 are managed using a file system UNIX or MS-DOS which is generally known. Incidentally, as regards the vocal data which is being processed by the information processing unit 5, vocal data management information have the same structure as that of the vocal file 74 is stored in the information processing storage unit 6.

Upon acknowledging the reset end of the voice input/output channel 36 from the voice processing unit 19, the information processing unit 5 secures the voice storing area for the new recording in the storage means described above. First, the unit 5 gives the voice processing unit 19 a command for providing the vocal file in the vocal RAM file anew. In addition, it secures the management information areas of the vocal file 74 in Fig. 7, within the information processing storage unit 6, and sets the contents of the areas to 0. Further, it stores the contents of a recording/playback condition table within the information processing storage unit 6, in the memory area 75 of the vocal file 74. The contents of a standard recording/playback condition file accumulated at the start-up of the system beforehand are read out, and are stored in the recording/playback condition table. The information processing unit 5 stores the recording/playback conditions in the recording condition storage area 21 and the playback condition storage area 35 which are included in the voice processing storage 18. Concretely, the information processing unit 5 checks to see if it is accessible to the above storage, on the basis of the output of the memory access conflict preventer 23. When it is acessible, it controls the information processing storage unit 6 so as to read out the contents of the recording/playback condition table and to store them in the storage areas 21 and 35.

On the other hand, the voice processing unit 19 finds an unused vocal file directory 64 in conformity with an unused vocal file route pointer 71 in Fig. 6 and connects the found vocal file directory 64 to the route directory 63 in Fig. 5. Besides, it sets 0 in the number of phrases and the vocal length within the vocal file directory 64 and writes a vocal file name in the command into the vocal file directory 64. In the above processing, in the absence of the unused vocal file directory 64 and phrase directory 65 or data block 67, the vocal file under use is saved in the information processing storage unit 6 or the filing unit 7, and the vocal file or phrase voice data in the vocal RAM file is erased, whereby the storage area necessary for the new recording is secured. This processing has the same contents as in a case where the vocal RAM file has come to have no unused area in the recording mode, and it will therefore be described in detail as to the case. When such processing steps have ended, the voice processing unit 19 informs the information processing unit 5 of the fact that the vocal file has been provided anew in the vocal RAM file.

The "vocal notes" have been made ready by the processing described above, and the information processing unit 5 begins to await a command from the editing window 55. Here, the operator selects of record" by the use of the position input device 3. Upon sensing the command "record", the information processing unit 5 issues a voice recording start instruction to the voice processing unit 19.

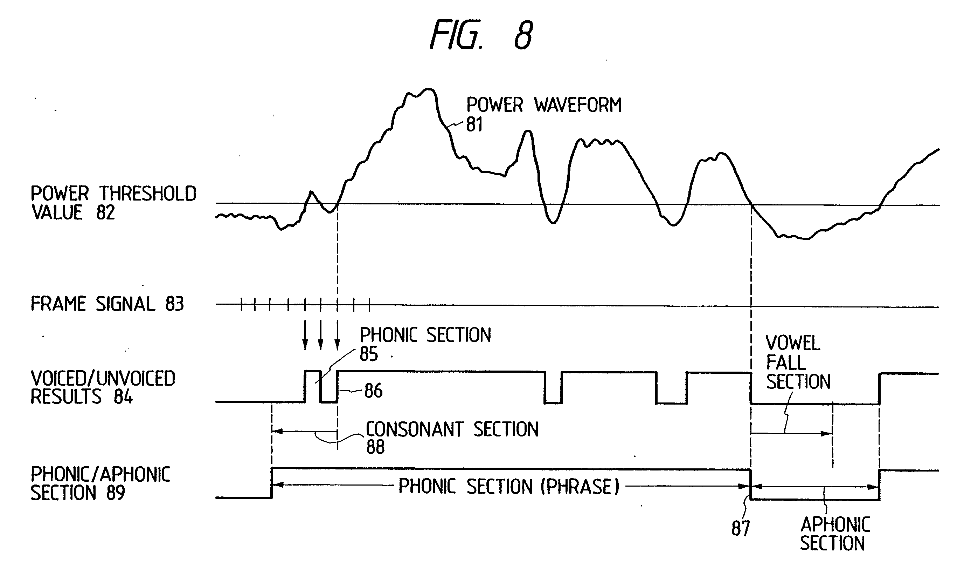

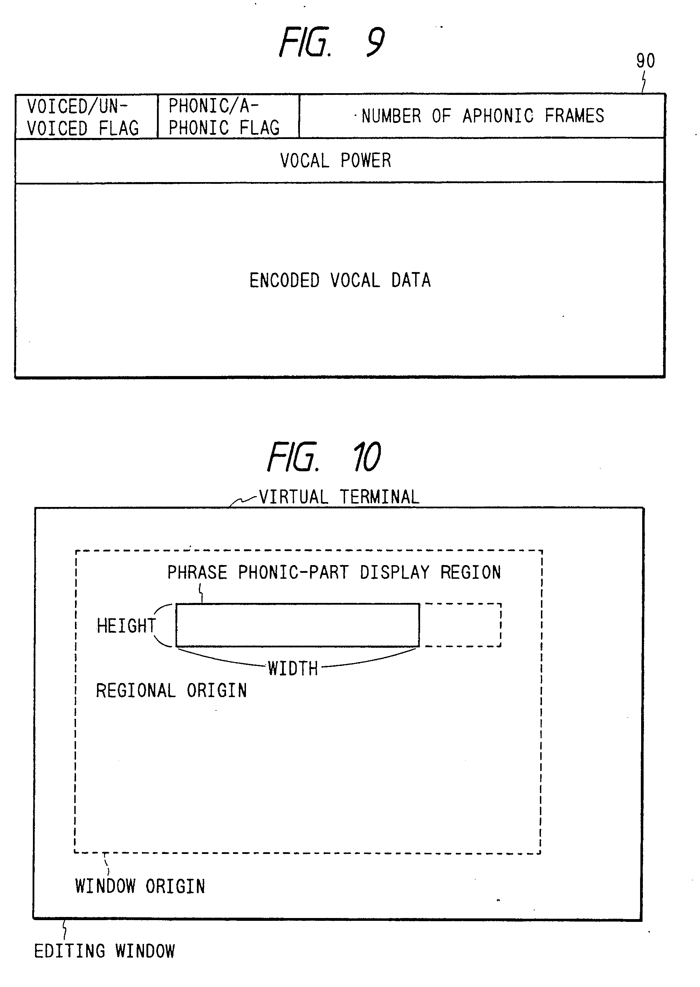

Upon receiving the instruction, the voice processing unit 19 starts voice analyzer 20 and encoder 14 so as to perform recording processing to be stated below, until it receives a recording stop instruction from the information processing unit 5. The encoder 14 samples the output signal of filter 9 and encodes the sampled signal for compression, and it delivers the encoded signal every frame, in accordance with a method conforming to international standard ratings CCITT G.721 ADPCM. On the other hand, analyzer 20 samples and accepts the output signal of filter 9, it calculates the absolute value of the signal to find the average value thereof throughout the frame, and it delivers the average value as the power value of the frame voice. Besides, as shown in Fig. 8, analyzer 20 compares the vocal power 81 with a threshold value, and it determines that a frame exceeding the threshold value 82 is voiced and a frame not exceeding the threshold value is unvoiced data, so as to deliver the decided results as outputs. The voice processing unit 19 loads the outputs at the intervals of the frames, arranges them into a data structure as shown in Fig. 9 and successively stores them in the data block in Fig. S. When the data block has become filled up, an empty data block is found on the basis of an unused block route pointer in Fig. 6 and is used in connection with the first-mentioned data block through the block map list. Besides, using the voice/unvoiced decision results 84, the voice processing unit 19 determines phonic and aphonic sections so as to compress the vocal data of the aphonic section. In this embodiment, the three conditions of the shortest voiced-state time, a consonant section and a vowel fall section are adopted for the decision of the phonic or aphonic section. First, in order to detect the assumed rise of the phonic part, the following comparison is made:

Voiced section $\geq$ Shortest voiced section In a case where the condition of Inequality (1) is met, the pertinent frame is set as the assumed rise 86 of the phonic part. Once the assumed rise 86 of the phonic part has been detected, the fall of the phonic part is subsequently detected in accordance with the following inequality:

Unvoiced section $\geq$ Vowel fall section (2) The first frame of the unvoiced section at the time at which Inequality (2) has held, is set as the fall 87 of the phonic part. Then, a section extending from the frame which precedes te assumed rise 86 of the phonic part by the aforementioned consonant section 88, to the fall 87 of the phonic part is decided as the phonic section, whereas any other section is determined to be an aphonic section. Further, the voice processing unit 19 decides if the aphonic section exceeds a phrase decision threshold value among the recording condition data items. When the aphonic section exceeds the threshold value, the number of frames of the aphonic section is stored in the first frame voice data 90 of the unvoiced section, thereby to compress the vocal data of the aphonic section. On this occasion, all the values of power and encoded vocal data in the frame voice data 90 are set to 0. Thereafter, a memory area for storing the next phrase is secured in the vocal RAM file by the same method as in the foregoing, and the recording processing stated above is repeated. In addition to the phrase decision, the voice processing unit 19 determines the end of a paragraph by the use of a paragraph-end threshold value among the recording condition data items, and it updates the number of phrases and the vocal length in the vocal file directory 64.

While executing such recording processing, the voice processing unit 19 interrupts the information processing unit 5 at intervals each being an integral times the frame and informs it of the recording processing status.

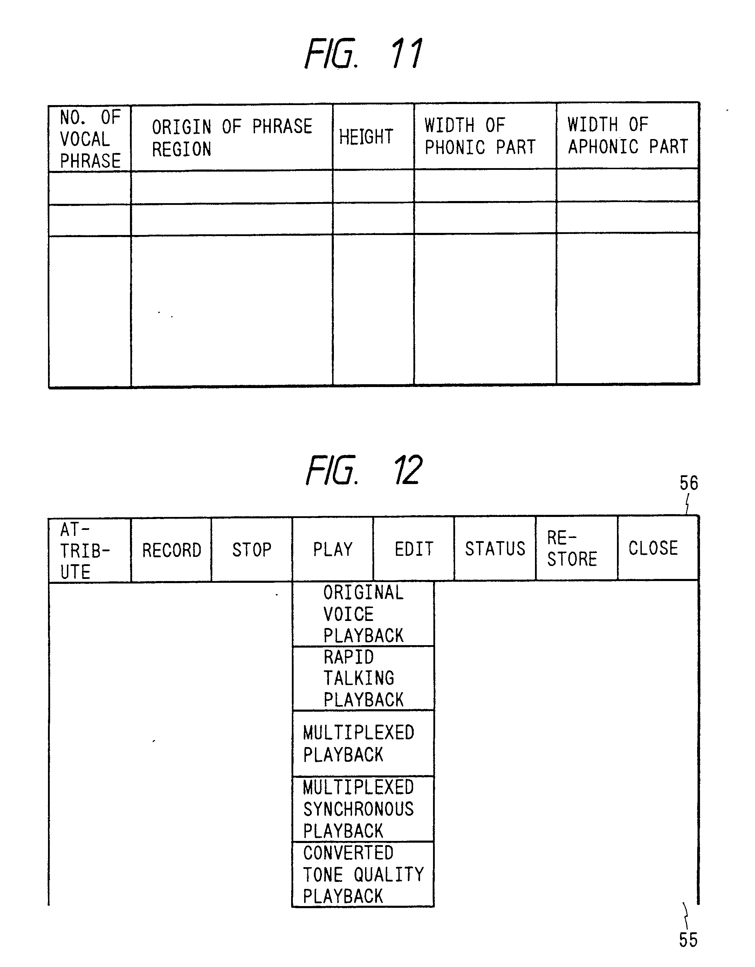

Upon sensing the interrupt, the information processing unit 19 reads the outputs of analyzer 20, the decided results of the phonic/aphonic states, etc. from the voice processing storage unit 18. In addition, it visualizes and displays the level of the vocal power in the region 58 within the editing window shown in Fig. 4. Besides, it counts the number of the interrupts to calculate the recording time and displays the calculated time in the region 57. Further, it visualizes and displays the phonic and aphonic states of the recorded voice as shown in Fig. 4 in accordance with the phonic/aphonic decision results. On this occasion, the information processing unit 5 defines the vocal data of one phase in the editing window as illustrated in Fig. 10. A phrase display region management table as shown in Fig. 11 is provided in the information processing storage unit 6 so as to establish the correspondence of the defined phrase voice data with the locations of the frame voice data items, and information items as indicated in the figure are stored in a phrase unit. In a case where the end of a paragraph has been detected, a new paragraph is started, and vocal data-is displayed.

As stated above, the recording processing of voices under the control of the voice processing unit 19 and the visualizing and display processing of the recorded data etc. by the information processing unit 5 proceed simultaneously and in parallel. When, under such a status, the information processing unit 5 senses the operator's command "stop", it issues the recording stop instruction to the voice processing unit so as to stop the above recording processing. Upon receiving the instruction, the voice processing unit 19 stops accepting the outputs from the voice input/output channel 36 and returns a stop response to the information processing unit 5.

Upon receiving the response, the information processing unit 5 loads the directory information items of the recorded vocal files stored in the vocal RAM file and writes them into the vocal data management information storage area 74 within the information processing storage unit 6. By way of example, the information items are the number of phrases 76, the vocal length 77, the vocal lengths of the phrases 78, and the numbers of frames in the phrases 79. After the recording stop, the voice processing unit 19 awaits the instruction from the information processing unit 5.

The operator selects the command "close" in order to end the editing such as the recording which utilizes the editing window. When this command is selected, the information processing unit 5 preforms processing (up-load) for reading the edited vocal data out of the vocal RAM file and stores it in the information processing storage unit 6 and further in the filing unit 7.

As up-loading methods, there are considered a method in which all the vocal data items of the vocal RAM file are up-loaded at one time and a method in which the vocal data items divided in a certain unit are up-loaded. In this embodiment, for the purpose of effectively operating the information processing unit 5, the vocal data items are up-loaded in a phrase unit, whereby the period of time for which the unit 5 is occupied for the voice processing is shortened to the utmost. Thus, the information processing unit examines the phrase voice file names in the vocal data management information storage area 74, to retrieve a phrase whose file name is not described, that is, a phrase for which the phrase voice data is not up-loaded yet. Subsequently, the information processing unit 5 gives the voice processing unit 19 the instruction for up-loading the vocal phrase. Upon receiving this instruction, the voice processing unit 19 examines the content of the phrase voice memory access conflict preventer 23. Thus, when it is acessible to the vocal RAM file, it loads the information processing storage unit 6 with the vocal data of a data block indicated by the block map list pointer of the vocal phrase, by the use of the DMA (Direct Memory Access) or PIO (Program Input Output) method which is a known technique. When one data block has been loaded, the block pointers are traced, and the next data block is loaded in the information processing storage unit 6 by the above method. The voice processing unit 5 repeats such processing until the pertinent phrase voice data is loaded in the information processing storage unit 6. When the vocal data items of one phrase have been up-loaded, the voice processing unit 19 informs the information processing unit 5 of this fact through an interrupt. When interrupted, the information processing unit 5 secures a phrase voice data file for storing the phrase voice data, in the filing unit 7, and it stores the phrase voice data stored in the information processing storage unit 6, in the file. On this occasion, the information processing unit 5 automatically generates the name of the phrase voice data file not conflicting with the others and stores the generated file name in the storage area 80 of the corresponding phrase. By way of example, identifiers including a date are generated.

The information processing unit 5 repeats the above up-load processing of the phrase voice data until all the vocal data items recorded in the "vocal notes" mode are stored in the filing unit 7. Thereafter, the information processing unit 5 reads out the contents of the voice playback condition storage area 35 and the recording condition storage area 21 and writes them into the vocal data management information storage area 74. Further, it generates a vocal file name not conflicting with the others and stores the contents of the vocal data management information storage area 74 in the filing unit 7 under the generated vocal file name. In addition, it stores the file name and the position of the icon 54 indicative of the location of the voice within the document, in the information processing storage unit 6, and it erases the editing window 56 from the display unit 2. Further, it changes, e. g., the color of the icon 54 from that in the open state of the editing window, thereby to inform the operator of the fact that the operating status of the system concerning the voice processing has changed.

In the above, there has been described one embodiment of the present invention for endowing a document with voice data. In the embodiment, the vocal RAM file for storing and managing the plurality of voices has been referred to. In this regard, the storage region of the vocal RAM file is finite, and it is sometimes the case that the vocal RAM file comes to have no empty storage area. one embodiment of the processing in this case will be described below.

In a case where, in any of the various sorts of voice processing, an unused vocal file directory has failed to be secured in the vocal RAM file, the voice processing unit 19 traces the route pointers 673 so as to find a vocal file erasable from the vocal RAM file. As methods for finding the erasable vocal file, there are comprised a method in which one vocal file connected to the route pointer 63 (for example, the vocal file connected first or last) is set as an object to-be-erased, and a method in which the names of vocal files in the document to be currently handled for the endowment with the voices by the information processing unit 5 are written into the voice processing storage unit 18 beforehand, whereupon the voice processing unit 19 refers to the written information and sets any vocal file other than the above vocal files as an object to-be-erased. Usually, the vocal file to-be-erased is found with the latter method. However, in a case where the vocal file to-be-erased has not been found with the latter method, it is found with the former method.

After having found the erasable vocal file in this way, the voice processing unit 19 retrieves the phrase directories connected to the phrase directory point of the pertinent vocal file directory, and it examines the area 68 to check if phrase voice data not up-loaded yet exists. When such phrase voice data does not exist, the unit 19 connects a data block coupled to the block map list pointer of the phrase directory, to an unused block route pointer while successively tracing the phrase directories connected to the phrase directory pointer of the pertinent vocal file directory, and it blanks the block map list pointer column. After the data blocks coupled to all the phrase directories of the vocal file to-be-erased have been released in this way, all the phrase directories connected to the phrase directory pointer of the vocal file to-be-erased are connected to unused phrase route pointers. In addition, the content of the forward pointer of the directory of the vocal file to-be-erased is written into a forward pointer indicative of the file directory, the contents of the file directory are blanked, and the file directory is connected to an unused vocal file route pointer. Then, the erase processing of the pertinent vocal file ends.

On the other hand, when the phrase voice data not up-loaded yet exists (this situation corresponds to a case where a vocal file under editing is to be erased), the voice processing unit 19 issues the interrupt of an up-load request for the phrase voice data, to the information processing unit 5 through the access unit 5. A vocal file name and phrase No. to be saved are affixed to the up-load request interrupt. Upon sensing the interrupt, the information processing unit 5 performs the foregoing up-load processing on the phrase voice data and stores this phrase voice data in the filing unit 7. The voice processing unit 19 repeats the above processing until all the phrase voice data items in the vocal file to-be-erased are up-loaded. Thereafter, it releases the vocal file to-be-erased through the processing stated before.

In the above, there has been explained the processing in the case where the unused vocal file directory has failed to be secured in the vocal RAM file. Similar processing is performed also in a case where an unused phrase directory fails to be secured. Meanwhile, in a case where a data block fails to be secured, an erasable vocal file is found by the processing stated before, followed by the processing of up-loading the vocal data of one phrase of the vocal file and the processing of releasing a phrase directory and data blocks. These procedures of processing are executed every frame and each time the voice editing instruction such as "record" or "play" is issued by the information processing unit 5.

Now, the procedures for processing of the commands other than "record" and "stop" displayed in the region 56 within the editing window shown in Fig. 4 will be described in order.

In the embodiment of the present invention, the operator can designate with the position input device 3, that one of the phrase voice data items displayed in the region 59 within the editing window which is to be processed by the command. To this end, each time positional information is entered from the position input device 3, the information processing unit 5 investigates which of the display regions of the editing window the designated position lies in. If the pertinent region is the region 59 displaying the vocal data, the information processing unit 5 further retrieves the phrase display region management table shown in Fig. 11 and checks to see if a phrase including the designated position exists. When the phrase exists, it serves as the designated phrase voice. Owing to this processing, the information processing unit 5 can know the vocal data which the operator wants to designate, in a phrase unit. In a case where a conventional mouse is used as the position input means, phrases are so distinguished that the phrase at the operation start position of the command is specified by positional information from the left button of the mouse, while the phrase at the operation end position of the command is specified by positional information from the right button of the mouse, whereby the operator can designate the range of the phrases to be handled by the command. In addition, in a case where the operator has selected the command without designating any phrase, the information processing unit 5 sets a phrase at which the voice cursor lies at that point of time, as the phrase of the operation start position. Besides, in a case where the operator has not designated the phrase of the operation end position, the unit 5 sets the last recorded phrase as the phrase of the operation end position.

Further, the information processing unit 5 emphasizes the designated phrase displayed in the region 59 within the editing window, by inverting or changing the color of the display portion thereof, whereby the operator is informed of the phrase acknowledged by the information processing unit 5.

The procedures for processing of the respective commands will be described in detail below. First, the command "play" will be explained. When the operator designates the object to-be-handled in accordance with the above method and then selects it "play" in the editing window shown in Fig. 4, the information processing unit 5 causes the display unit to display a pop-up menu as shown in Fig. 12 and causes the operator to further select the playback mode. One embodiment of the present invention comprises the function of playing back the frame voice data in the range designated by the above processing, in accordance with different methods. Referring to Fig. 12, original voice playback is a mode in which the recorded voice is played back at the same speed and pitch as those in the recording operation, rapid talking playback is a mode in which only the speed of the voice is made higher than in the recording operation without changing the pitch thereof, multiplexed playback is a mode in which designated voices are played back in sequentially multiplexed fashion, multiplexed synchronous playback is a mode in which designated voices are played back in simultaneously multiplexed fashion, and converted tone quality playback is a mode in which the voice is played back by changing the pitch or the like thereof from that in the recording operation.

When the original voice playback mode is selected, the information processing unit 5 instructs the voice processing unit 19 to establish a connection which applies the output signal of voice processing storage 18 to decoder 15. Also, it erases the pop-up menu in Fig. 12 and gives the voice processing unit 19 an instruction for the original voice playback of the phrase voice data in the designated range. A playback vocal file name, a playback start phrase and a playback end phrase are affixed to the original voice playback instruction. Incidentally, it is assumed in the description here that the vocal data to be played back has been loaded from the filing unit 7 in the information processing storage unit 6 by the information processing unit 5 and has already been stored in the vocal RAM file. Processing in the case where the vocal data to be played back does not exist in the vocal RAM file, will be described later.

The voice processing unit 19 searches for a desired vocal file directory by tracing the route directory of the vocal RAM file shown in Fig. 3. Upon detecting the desired directory, the voice processing unit 19 selects the equipment for outputting the voice, by the use of the voice output selector 10 in Fig. 1, and it thereafter starts the voice analyzer 20 and the decoder 15 shown in the figure. Subsequently, it reads out the playback conditions, such as a playback phrase time, a playback paragraph-end time and a playback sound volume, from the voice playback storage area 35, and it transfers the playback sound volume and voice multiplicity one to the decoder 15. Thenceforth, the voice processing unit 19 performs original voice playback processing to be stated below, until it receives a stop instruction from the information processing unit 5 or reaches the designated end frame. The voice processing unit 19 obtains the playback phrase voice data on the basis of the vocal file directory through the foregoing processing, and it extracts the frame voice data shown in Fig. 9 from the data blocks for every frame and transfers the extracted data to the decoder 15. The decoder 15 decodes the voice encoded by the method conforming to the international standard ratings CCITT G.721 ADPCM, and multiplies the decoded voice by the playback sound volume. Thereafter, it converts the resulting voice into the original analog waveform through the filter 11 shown in Fig. 1. As stated in the voice recording processing, the last frame voice data of the vocal data of one frame has been recorded with the aphonic part of the input voice compressed into one frame. Therefore, when the voice processing unit 19 has reached the pertinent frame, it finds the number of aphonic frames, Fr in the frame voice data, and it compares the number Fr with the playback phrase time and the playback paragraph-end time as follows, so as to find the number of playback aphonic frames, Fp:

If Fr < Ff, then Fp = Fr    (3)
If Fr ≥ Ff and Fr < Fs, then Fp = Ff    (4)
If Fr ≥ FS, then Fp = Fs    (5)

Here, Ff and Fs denote the values of the playback phrase time and playback paragraph-end time in terms of the numbers of frames, respectively, and they are stored in the playback condition storage unit 35. After the number Fp of playback aphonic frames has been found in this way, items of aphonic frame voice data in each of which the values of the power and the encoded vocal data are 0 are delivered to decoder 15 repeatedly in the number of frames, and an aphonic section is generated under the designated playback conditions.

In addition to such processing, the voice processing unit 19 transfers the output of the analyzer 20 to the information processing unit 19 as in the recording processing, so as to display the level of a playback voice, the position thereof, etc. in the editing window in real time.

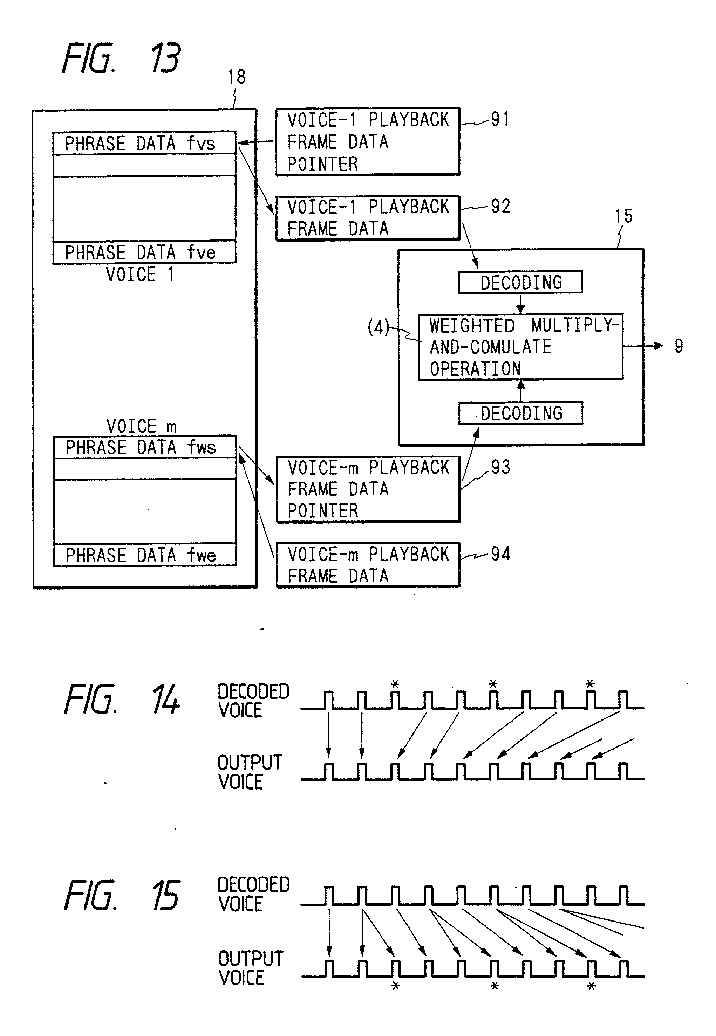

Thus far, the processing of the original voice playback has been explained. Next, the processing of the multiplexed playback mode will be explained. When the multiplexed playback mode is selected, the information processing unit 5 examines if another voice is being played back at that point of time. When another voice is not being played back, the processing of the original voice playback mode is performed to play back voices. When another voice is being played back, the information processing unit 5 gives the voice processing unit 19 an instruction for multiplexedly playing back phrase voice data in a designated range. playback vocal file names, a playback start phrase and a playback end phrase are affixed to the multiplexed playback instruction. Upon receiving the multiplexed playback instruction, the voice processing unit 19 executes processing as shown in Fig. 13 and realizes the multiplexed playback. The relations of elements indicated at numerals 91, 92, 18 and 15 in the figure illustrate the details of the processing described on the original voice playback mode, in which the frame voice data is extracted from the data block of the vocal RAM file for every frame and is transferred to the decoder 15. The element 91 stores that address in the data block in which the frame data to be played back is stored, while the element 92 stores the vocal data of one frame read out of the data block. The content of the element 91 is altered according to the aforementioned processing. After accepting the multiplexed playback instruction, the voice processing unit 19 secures another set of the elements 91 and 92 in Fig. 13 (elements at numerals 93 and 94 in the figure) and transfers voice multiplicity 2 to the decoder 15. Using both the elements, the playback frame voice data items of two voices are extracted and are transferred to the decoder 15 together. Upon receiving these items of playback frame voice data, the decoder 15 restores the individual voices in accordance with the foregoing method. It executes the weighted multiply-and-cumulate operation of the decoded signal as indicated by the following formula for every output sampling cycle, and provides an output in a normalized form:

$$Vj \; = \; \sum_{k=1}^{n} \; Wn,k \; * \; Vj \; , \; Vk \qquad (6)$$

Here n denotes the multiplicity, Vj the value of a multiplexed playback voice at a sample point j, Wn,k the normalizing weight constant of the k-th voice at the multiplicity n, and Vj,k the value of the encoded voice of the k-th voice at the sample point j. Incidentally, the constants Wn,k are set in the encoder 14 by the voice processing unit 19 at the start-up of the system.

Owing to the processing stated above, the voice processing unit 19 multiplexes and plays back the plurality of voices since the designated point of time. By the way, when the phrase voices in the designated range have ended in each individual playback voice, the voice processing unit 19 releases the frame data extraction storage unit, and it reduces the multiplicity to that extent and transfers the resulting multiplicity to the decoder 15, thereby to automatically control the multiplicity. Besides, it performs the processing under the same playback conditions as in the original voice playback mode.

Next, the processing of the multiplexed synchronous playback mode will be explained. In the foregoing, the processing for permitting the operator to designate the range of voices which are to be played back within the editing window has been described. The information processing unit 5 further judges if designated ranges overlap, thereby to know if a plurality of ranges have been designated. In the case of the multiplexed synchronous playback mode, the operator designates a plurality of ranges and selects the multiplexed synchronous playback mode owing to this processing. The information processing unit 5 performs the same preprocessing as in the original voice playback mode, and thereafter issues a multiplexed synchronous playback instruction to the voice processing unit 19. The information items indicating the plurality of vocal playback ranges are affixed to this instruction. Upon receiving the instruction, the voice processing unit 19 secures the frame data extraction storage unit shown in Fig. 13, in a plurality of sets designated. Thenceforth, it executes the same processing as in the preceding multiplexed playback mode and synchronizes the plurality of voices to play them back in multiplexed fashion.

Next, the processing of the converted tone quality playback mode will be explained. When this mode is selected, the information processing unit 5 executes the same preprocessing as in the original voice playback mode and issues a converted tone quality playback instruction to the voice processing unit 19. Upon receiving this instruction, the voice processing unit 19 performs the initial processing of the original voice playback mode, and besides, it sets in the decoder 15 a pitch conversion degree which is a tone quality conversion parameter and which is stored in the playback condition storage area 35. Also, the multiplicity one is set in the decoder 15. In addition, the voice processing unit 19 starts the voice input/output channel, thereby to extract frame voice data and transfer it to the decoder 15 as stated before.

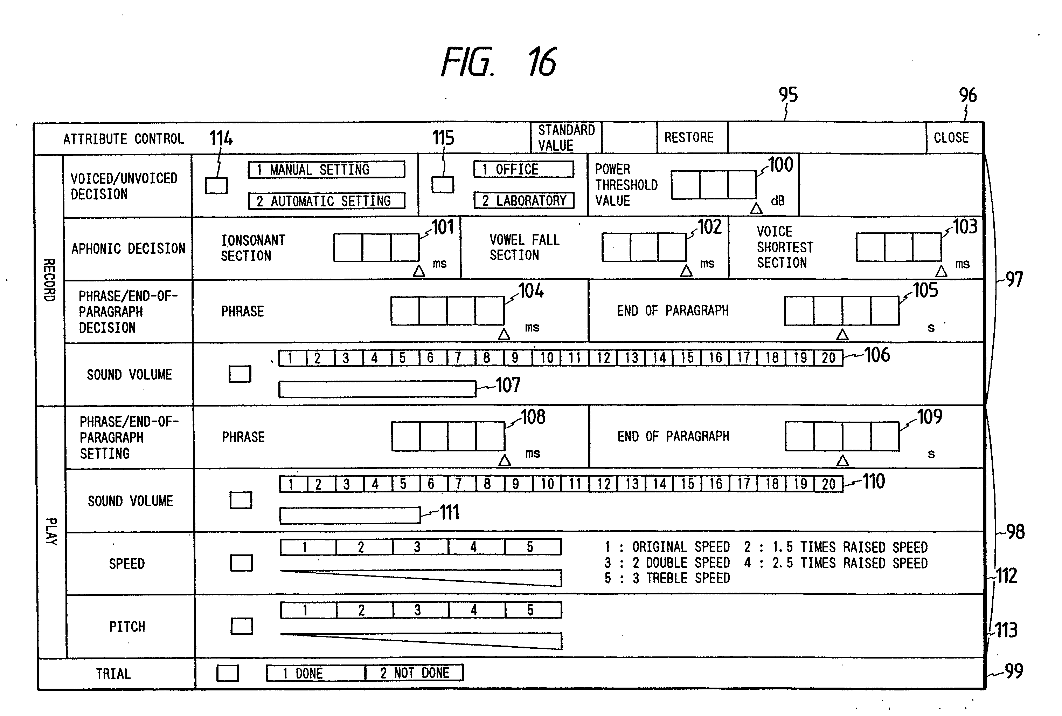

When the pitch conversion degree is one, the decoder 15 performs the same playback processing as in the original voice playback. However, in case of heightening or lowering a vocal pitch relative to that of the original voice, the decoder 15 performs processing illustrated in Fig. 14 or Fig. 15. More specifically, in the case of heightening the pitch, decoded voice signals are thinned out in proportion to the conversion degree and then delivered as shown in Fig. 14. In the case of lowering the pitch, the same voice signals are inserted into decoded voice signals in proportion to the conversion degree as shown in Fig. 15, the resultant voice signals being delivered as an output. By the way, the aphonic section is not subjected to these operations. In one embodiment of the present invention, such processing is carried out to convert the tone quality of the playback voice.

Thus far, there have been described the procedures of processing of the voice playback modes available in the embodiment of the present invention. Since the voice played back in each playback mode is input to the encoder 14 via the selector 8, it can also be recorded by the processing of the "record" operation stated before. The procedures for processing of the other commands shown in the editing window 55 will be explained below.

First, the "attribute" command will be explained. The "attribute" is a command for altering the various conditions of the operations of recording and playing back voices. When the "attribute" is selected by the operator, the information processing unit 5 generates an attribute control window 95 shown in Fig. 16 and displays it on the display unit 1. On this occasion, the information processing unit 5 stores display items and display positions within the window in the information processing storage unit 6 by the use of the method as explained for the display management of phrase voice data. Subsequently, when positional information is received from the position input device 3, the information processing unit 5 uses the information to investigate which of the items of the display regions the pertinent position lies in, thereby to know the item selected by the operator. Thereafter, an input value produced by the image scanner 4 or the position input device 3 is stored in that location of the recording condition storage area 21 or playback condition storage area 35 within the voice processing storage unit 18 which corresponds to the selected item. The information processing unit 5 executes such processing, thereby permitting the operator to perform the editing etc. of voices while he/she is dynamically setting the recording/playback conditions of the voices through the attribute control window.

As shown in Fig. 16, the attribute control window 95 is broadly classified into four display regions. The region 96 displays a command menu column, the region 97 displays recording condition setting columns, the region 98 displays playback condition setting columns, and the region 99 displays a trial selecting column. At the point of time at which the information processing unit 5 has generated and displayed the attribute control window 95 in response to the selection of the "attribute", it reads out values stored in the recording/playback condition storage areas 21, 35 and displays them in the respective columns. Here, the display contents of each region will be explained.

The command "standard values" in the region 96 serves to annul conditions have been set before, and to record or play back voices with standard values determined at the start-up of the system. When this command is selected, the information processing unit 5 stores the conditions kept in the recording/playback tables within the information processing storage unit as referred to in the description of the processing of the " vocal notes", in the recording condition storage area 21 and playback condition storage area 35 within the voice processing storage unit 18. The command "restore" in the region 96 calls for setting the original recording/playback conditions displayed at the opening of the attribute window. When this command is selected, the information processing unit 5 stores the recording/playback conditions among the vocal data management information items on voices to-be-edited as shown in Fig. 7 and kept in the information processing storage unit 6, in the recording condition storage area 21 and playback condition storage area 35 within the voice processing storage unit 18. Further, the command of "close" in the region 96 calls for ending the setting of the recording/playback conditions by the attribute control window 95. When this command is selected, the information processing unit 5 erases the attribute control window 95 from the display unit 1 and returns to the processing of the editing window.

Next, the recording condition setting columns of the region 97 will be described. The processing contents of values set in a power threshold valve column 100, a consonant section column 101, a vowel fall section 102, a voiced shortest section column 103, a phrase column 104 and an end-of-paragraph column 105 contained in the region have been referred to in the description of the processing of the command "record", and they shall therefore be omitted here. A sound volume column 106 serves to designate the gain of an input voice. When any value of the column is selected, the information processing unit 5 sets the value of the column in the recording condition storage area 21, and it instructs the voice processing unit 19 to control the gain of the filter 9 of the voice input channel. When thus instructed, the voice processing unit 19 reads out the gain value from the recording condition storage area 21 and controls the gain of the filter 9. A display column 107 is a column for indicating the level of the input voice from the voice input equipment in terms of a lateral bar display. This display is realized by executing only the part of the display processing of the output signal of the analyzer 20 in the "record" processing. Using the sound volume display, the operator can regulate the level of the input voice in real time.

Further, the playback condition setting columns of the region 98 will be described. The processing contents of values set in a phrase column 108, an end-of-paragraph column 109 and a pitch column 113 shown in Fig. 16 have been referred to in the description of the processing of the command "play", and they shall therefore be omitted here. A speed column 112 is a column for setting a speed in the rapid talking mode. Besides, a playback sound volume column 110 serves to designate the gain of an output voice. Any any value of the display column is selected, the information processing unit 5 sets the value in the playback condition storage area 35. A display column 111 is a column for displaying the level of the playback voice in terms of a lateral bar in real time.

On the other hand, the trial selection column 99 is a column which makes it possible to select the trial of the recording of a voice for trial use-or-the-:playback of this voice under the conditions designated with the region 97 or the region 98. When a trial "to be done" is selected in this column and any column of the recording conditions or playback conditions is set, the information processing unit 5 executes the recording or playback under the set condition in conformity with the above processing steps, thereby causing the operator to examine if the set condition is appropriate. In this case, however, a vocal file to be used is one which is comprised for the trial beforehand. In addition, when a trial "not to be done" in the trial selection column 99 is selected during the trial, the information processing unit 5 executes the same processing as that of the command "stop" in the editing window 55, thereby to stop the recording or playback.

In addition, one embodiment of the present invention comprises the function of automatically obtaining, on the basis of a service environment, the power threshold value which is the threshold value of the voiced/unvoiced state decision of a voice in the recording operation. Selection display columns 114 and 115 in the attribute control window are portions relevant to this function. When if automatic setting" is selected in the selection display column 114, the information processing unit 5 executes recording by the same steps as in the command "record" However, the unit 5 counts the interrupts from the voice processing unit 19, and it issues a recording stop instruction to the voice processing unit 19 when a predetermined number stored in the information processing storage unit 6 has been reached. Upon sensing the predetermined number of interrupts, the information processing unit 5 reads the level of the power of noise etc. in the service environment of the system out of the voice processing storage unit 18 in accordance with the same method as in the "record" processing. Subsequently, it evaluates the average of the power and multiplies this average by an environmental index (a value previously determined for the system) selected in the selection display column 115, and it sets the result as the power threshold value which is the threshold value of the voiced/voiceless state decision.

Thus far, the processing of the command "attribute" comprised in the embodiment of the present invention has been explained. Next, the command "edit" will be elucidated.

When the command "edit" is selected as stated before, the information processing unit 5 alters the display contents of the command menu column into those shown in Fig. 3. In the example illustrated in Fig. 3, the "edit" command forms a hierarchic menu. Such a structure is adopted for the purpose of making smaller the display region of the command menu column in the editing window 55, thereby to suppress the size of the whole editing window. However, the command "edit" may well be displayed jointly with the other commands "record", if play" etc.

First, when "erase" is selected in the command menu column in Fig. 3, the information processing unit 5 erases phrase voices in a range designated in the vocal data display region 59 within the editing window 55, from the phrase display region management table shown in Fig. 11. Subsequently, the information processing unit 5 erases all the display contents of the vocal data display region 59, and using the display information items of phrases stored in the updated phrase display region management table, it calculates and displays a display region again. Further, it reads out the vocal data file names of the erased phrases in the corresponding vocal data management information 74 within the information processing storage unit 6 and conserves the vocal file names of the erased phrases in the information processing storage unit 6. Thereafter, it erase the information items on the erased phrases from the vocal data management information 74, and it subtracts the syllable lengths of the erased phrases from the total vocal length 77 and similarly subtracts the number of the erased phrases from the total number of phrases 76. Then, it executes the process of filling up the information columns of the erased phrases. In parallel with these processing steps, the information processing unit 5 gives the voice processing unit 19 an instruction for erasing the phrase voice data of each of the noted vocal files in the vocal RAM file. An erasure voice file name, an erasure head phrase and an erasure tail phrase are affixed to the erasing instruction. Upon receiving the instruction, the voice processing unit 19 detects a desired vocal file directory while tracing the route directory 63. Subsequently, it traces the phrase directory pointers in the directory and retrieves the directory of the phrase to-be-erased. Thereafter, it performs the same processing as in the case where the vocal RAM file has come to have no empty memory capacity in the of record" operation, thereby to erase the frame voice data from the vocal RAM file. When the invoice processing unit 19 has ended the erasing processing, it informs the information processing unit 5 of the completion of the execution of the erasing instruction.

Thus far, the processing of the command "erase" has been explained. Next, the processing of the command "move" will be elucidated.

When the command "move" is selected, the information processing unit 5 moves, in the phrase display region management table shown in Fig. 11, display information items for phrase voices in a range designated in the vocal data display region 59 within the editing window 55, ahead of display information columns concerning a movement designation phrase in the table. This processing is effected by rearranging the information items of the table. Subsequently, the unit 5 erases all the display contents of the vocal data display region 59, and using the display information items of phrases stored in the updated phrase display region management table, it calculates and displays a display region again. Thereafter, also in the vocal data management information 74 concerning the voices, the unit 5 rearranges the phrase voice information items (the vocal lengths 78, the numbers of frames 79, and the phrase voice file names 80), thereby to move the vocal information items of the phrases in the designated range. In parallel with these processing steps, the information processing unit 5 gives the voice processing unit 19 an instruction for erasing the phrase voice data of each of the noted vocal files in the vocal RAM file. A movement voice file name, a movement source head phrase, the number of movement phrases and the movement destination phrase are affixed to the movement instruction. Upon receiving the instruction, the voice processing unit 19 detects a desired vocal file directory while tracing the route directory 63. Subsequently, it traces the phrase directory pointers in the directory and retrieves the directories of the movement source head phrase and the movement destination phrase. Thereafter, the phrase directories in the number of the movement phrases as reckoned from the movement source head phrase are separated from the chain of the phrase directories. That is, in Fig. 5, the forward pointer of the phrase directory connecting the movement source head phrase directory is connected to the directory of a movement source tail phrase. Further, the forward pointer of the phrase directory connecting the movement destination phrase directory is connected to the directory of the movement source head phrase. Besides, the forward pointer of the movement source tail phrase directory is coupled to the movement destination phrase directory. Then, the movement of the phrase voice data is ended. Upon ending the movement processing, the voice processing unit 19 informs the information processing unit 5 of the completion of the execution of the pertinent instruction.

Thus far, the processing of the command "move" has been explained. Next, the processing of the command "copy" will be elucidated.

When the command "copy" is selected, the information processing unit 5 copies, in the phrase display region management table shown in Fig. 11, display information items on phrase voices in a range designated in the vocal data display region 59 within the editing window 55, ahead of display information columns concerning a copying destination phrase in the table. This processing is effected by rearranging the information items of the table. Subsequently, the unit 5 erases all the display contents of the vocal data display region 59, and using the display information items of phrases stored in the updated phrase display region management table, it calculates and displays a display region again. Thereafter, also in the vocal data management information 74 concerning the voices, the unit 5 rearranges the phrase voice information items (the vocal lengths 78, the numbers of frames 79, and the phrase voice file names 80), thereby to copy the vocal information items of the phrases in the designated range ahead of the copying destination phrase and to update the total number of phrases and the total vocal length. However, the columns of the phrase voice file names 80 of the plurality of copied phrases are blanked. In parallel with these processing steps, the information processing unit 5 gives the voice processing unit 19 an instruction for copying the phrase voice data of each of the noted vocal files in the vocal RAM file. A copying voice file name, a copying source head phrase, the number of copying phrases and the copying destination phrase are affixed to the copying instruction. Upon receiving the instruction, the voice processing unit 19 detects a desired vocal file directory while tracing the route directory 63. Subsequently, it traces the phrase directory pointers in the directory and retrieves the directories of the copying source head phrase and the copying destination phrase. Thereafter, unused phrase directories in the number of the copying phrases are secured, and they are inserted before the copying destination phrase directory by performing the pointer operations as described in the "move" processing. Further, unused data block areas in the number of blocks corresponding to copying source phrases are secured and are connected under the secured phrase directories. In

14

addition, the vocal data items in the data blocks of the copying source phrases are copied in the secured data blocks. Lastly, the vocal length and the number of phrases in the vocal file are updated in the number of the copied phrases. Upon ending the copying processing, the voice processing unit 19 informs the information processing unit 5 of the completion of the execution of the pertinent instruction.

Thus far, the processing of the command "copy" has been explained. Next, the processing of the command "insert" will be elucidated.

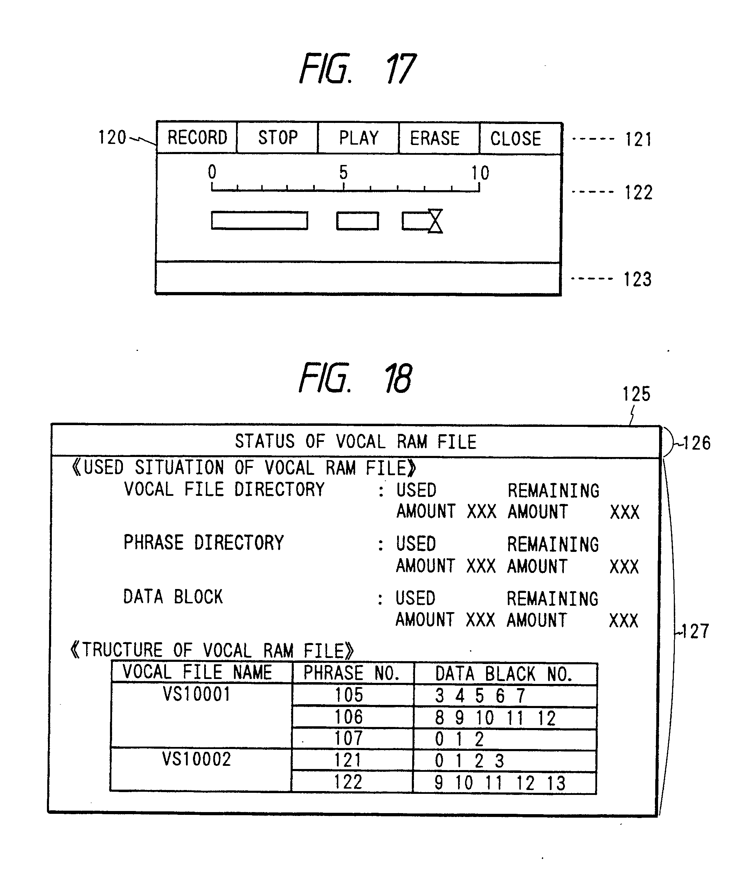

When the command "insert" is selected, the information processing unit 5 generates an insertion window 120 shown in Fig. 17 separately from the editing window and displays it on the display unit 1. The operator can acknowledge or erase an insertion voice in such a way that vocal data to be inserted is recorded and played back on the insertion window. There is also a method in which a voice is inserted on the editing window without using a separate window in this manner. It is difficult, however, to cause the display of vocal data behind an insertion position in the display region 55 is scrolled in real time in the editing window each time the insertion voice is recorded. Accordingly, the above method is adopted in one embodiment of the present invention.

As illustrated in Fig. 17, the insertion window 120 is broadly divided into three display regions. The region 121 is a command menu column, the region 122 is a region which visualizes and displays insertion voice data recorded and which is the same as the region 59 of the editing window, and the region 123 is a window operation command display column.

After displaying the insertion window 120, the voice processing unit 5 secures the phrase voice display region management table in Fig. 11, as described for the processing of the command "record", in the information processing storage unit 6 separately for the insertion window in order to display the recorded insertion voice in the region 122. Then, the unit 5 awaits the operator's selection of a command in the insertion window. When, under such a status, "record" is selected by the operator, the information processing unit 5 gives the voice processing unit 19 an instruction for recording a voice behind the last phrase voice recorded in the editing window. Upon receiving the instruction, the voice processing unit 19 executes the "record" processing of the editing window and connects the recorded vocal data behind the last phrase voice. Meanwhile, the information processing unit 5 performs the same processing as the "record" processing of the editing window, and it visualizes and displays the recorded voice in the region 122 of the insertion window 120 in real time. Regarding any other command displayed in the region 121 of the insertion window, the same processing as in the corresponding command in the editing window is executed.

When, after the recording of the insertion voice by such processing, the operator selects "close" in the insertion window, the information processing unit 5 erases the insertion window from the display unit 1. Subsequently, the unit 5 moves the insertion voice data recorded behind the last phrase voice, ahead of an insertion destination phrase designated in the editing window, thereby to end the processing of "insert". Since the movement processing has een detailed in the description of the command "move" in the editing window, it shall be omitted here.

Thus far, the processing of the command "insert" in the editing window has been explained. Next, the processing of the command "status" in the window will be elucidated.

When the command "status" is selected, the information processing unit 5 generates a window 125 shown in Fig. 18 separately from the editing window and displays it on the display unit 1. The window 125 informs the operator of the situation of use of the vocal RAM file. As illustrated in Fig. 18, the window 125 is broadly divided into two display regions. The region 126 is a command menu column, while the region 127 is a region for displaying the outline and details of the situation of use of the vocal RAM file. The information processing unit 5 evaluates the remaining amounts of the respective directories and data blocks while tracing the several sorts of route pointers shown in Fig. 6, and also evaluates the installed capacities thereof in the vocal RAM file from information items contained in the system area in the figure. Subsequently, it calculates the used amounts of the directories and data blocks by subtracting the remaining amounts from the installed capacities and displays them in the window. Meanwhile, regarding the details of the situation of use of the vocal RAM file, the unit 5 obtains information items shown in Fig. 18 while tracing the directories shown in Fig. 5 and displays them in the window. When, after the display of the window based on such processing, the operator selects "close" in the widow, the information processing unit 5 erases the window from the display unit 1.

Thus far, the processing of the command "status" in the editing window has been explained. Next, the processing of the command "restore" in the window will be elucidated.

When the command "restore" is selected, the information processing unit 5 erases all of vocal data items displayed in the display region 59 within the editing window. Subsequently, the unit 5 examines if a vocal file to-be-edited is accumulated in the filing unit 7. When the vocal file is not accumulated, the unit 5

EP 0 402 911 A2

performs the initialization processing for new recording as described before. In contrast, when the vocal file is accumulated, the unit 5 reads out the contents thereof and stores them in the vocal data management information storage area shown in Fig. 7 as included in the information processing storage unit 6. Thereafter, the unit 5 gives the voice processing unit 19 an instruction for erasing the vocal file in the vocal RAM file. Upon receiving the erasing instruction, the voice processing unit 19 detects the vocal file within the vocal RAM file through the foregoing processing and releases it in such a way that a data block, a phrase directory and a vocal file directory which constitute the pertinent vocal file are respectively connected to the unused route directory shown in Fig. 4. When the voice processing unit 19 has ended such processing of erasing the vocal file, it informs the information processing unit 5 of this fact.

Upon accepting the end of the erasure, the information processing unit 5 gives the voice processing unit 19 an instruction for providing a vocal file in the vocal RAM file anew. The name of the vocal file to be edited, the number of phrases thereof and the vocal length thereof are affixed to the instruction. The voice processing unit 19 executes the foregoing processing to secure a new vocal file directory and to store the vocal file name, the number of phrases and the vocal length as designated, in the vocal file directory. Subsequently, phrase directories in the designated number are secured and then connected to the vocal file directory by the foregoing processing.

At the next step, the voice processing unit 5 executes processing (down-load) for reading out the vocal data of the vocal file to-be-edited from the filing unit 7 and stores it in the vocal RAM file. In this embodiment, the vocal data is down-loaded in phrase unit in the same manner as in the up-load processing described before. When, while tracing the phrase directory pointers of the vocal file directory, the voice processing unit 19 detects a phrase directory for which the block may list pointer is empty, it applies an interrupt for down-loading the pertinent phrase voice data, to the information processing unit 5. A vocal file name and down-load No. are affixed to the interrupt. Upon receiving the interrupt, the information processing unit 5 obtains the phrase voice data file name of the designated phrase No. from the vocal data management information storage area and loads the content (the phrase voice data) of the pertinent fle from the filing unit 7 into the information processing storage unit 6. Subsequently, the unit 5 transfers the phrase voice data of the information processing storage unit 6 into the voice processing storage unit 18 in accordance with the DMA or PIO method. Thereafter, it informs the voice processing unit 5 of the end of the transfer of the phrase voice data. Upon receiving the information, the voice processing unit 5 divides the phrase voice data within the voice processing storage unit in the size of the data block. Subsequently, it secures the data blocks in a required number and connects them to the phrase directory, and it stores the phrase voice data in the secured data blocks. Upon ending this processing, it sets the value of the storage area 68 in the phrase directory to 1, thereby to indicate that the phrase voice data is accumulated in the filing unit 7, and it also writes the number of frames.

The voice processing unit 5 repeats the above operation of down-loading the phrase voice data in the designated number of phrases, thereby to store the vocal data for the editing in the vocal RAM file. Upon ending this processing, it informs the information processing unit 5 of this.fact. When informed, the information processing unit 5 writes the recording/playback conditions within the vocal data management information into the recording condition storage area 21 and playback condition storage area 35 within the voice processing storage unit 18, thereby to end the processing of the command "restore".

In the above, there have been described the embodiments of the processing of endowing the document or the like with the vocal notes and the processing of editing the vocal data by the use of the editing window etc. Now, there will be described processing contents concerning functions comprised in one embodiment of the present invention with respect to vocal data already bestowed on a document and vocal data separately recorded.

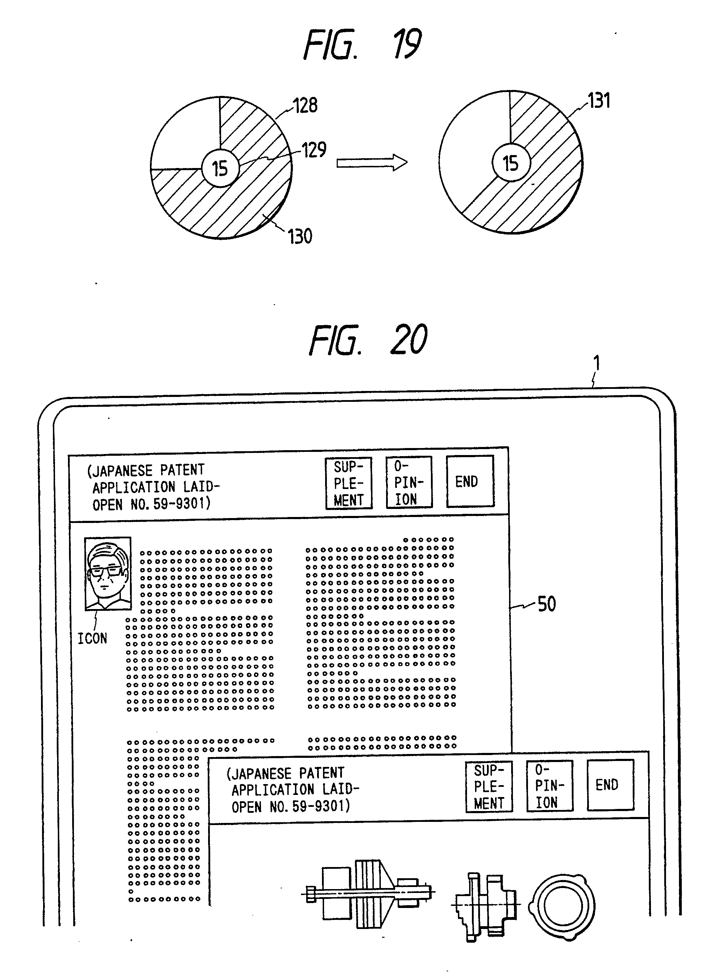

In the present invention, as shown in Fig. 2, the icon 54 indicative of the place of voice is displayed by controlling the multiwindow display 2. Apart from the icon 54 in Fig. 2, the function of displaying an icon as shown in Fig. 19 or Fig. 20 is also comprised in the present invention. The icon 128 in Fig. 19 expresses the length of a recorded voice and the remaining amount thereof during playback. A value at numeral 129 in this icon indicates the length of the recorded voice, while a region at numeral 130 indicates the remaining amount in the playback operation. An icon 131 in Fig. 19 indicates the state of the icon 128 in the figure after the lapse of several seconds. On the other hand, the icon in Fig. 20 displays the speaker of a recorded voice in terms of the picture of his/her portrait. Regarding this icon, the portrait of the speaker is quantized and stored in the file processing unit 7 by the use of the input image scanner 26 beforehand, and it is read out from the filing unit 7 and displayed at an icon displaying position by the multiwindow display unit 2 when required.

The processing, such as playback, of voice after bestowing the voice on a document by the "vocal notes" and expressing the place thereof with the icon, proceeds as follows:

16

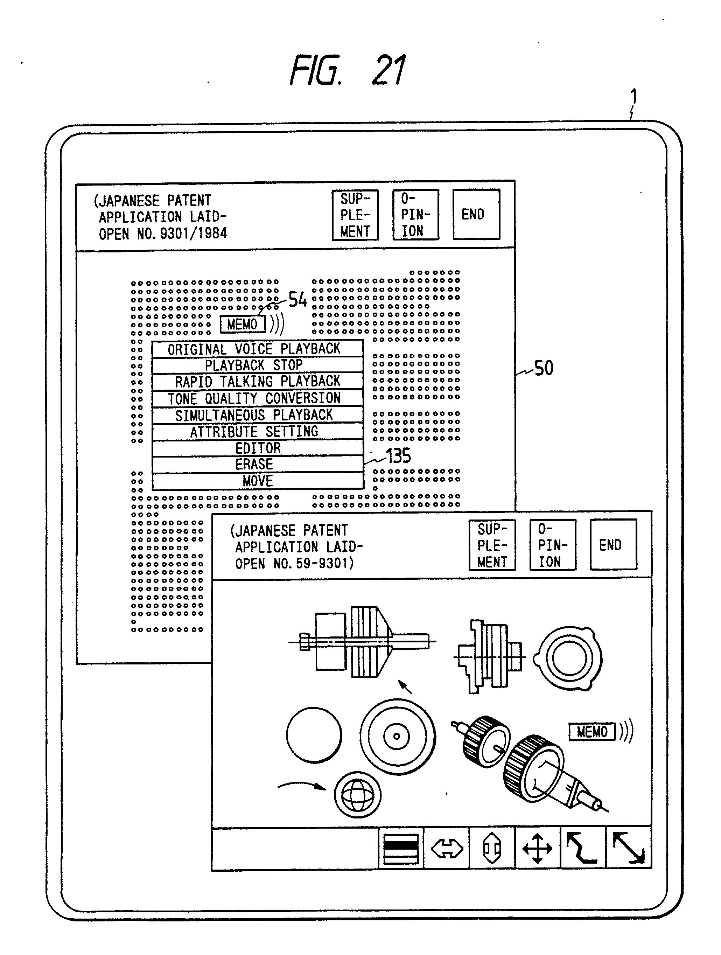

In a case where the operator wants to dispose of the voice bestowed on the document, he/she designates the icon with the position input device 3. The information processing unit 5 compares positional information received from the position input device 3 and the information of a region where the icon is displayed, this information being stored in the information processing storage unit 6. If the designated position lies within the icon displaying region, the unit 5 generates a pop-up menu 135 shown in Fig. 21 and displays it near the designated icon. The pop-up menu 135 displays operation commands for the voice specified by the icon. Subsequently, the unit 5 reads out the contents of a vocal file indicated by the icon, from the filing unit 7, and it stores them in the vocal data management information storage area shown in Fig. 7 and included in the information processing storage unit 6. Thereafter, it examines if the pertinent vocal file is stored in the vocal RAM file. In a case where the vocal file is not stored, the unit 5 performs the processing of accumulating the vocal file in the vocal RAM file as explained in the "restore" processing. Then, it awaits the operator's selection of any command in the pop-up menu 135.

The procedures of processing of the information processing unit 5 and voice processing unit 19 concerning the voice playback and stop commands in the pop-up menu 135 perform the same processing steps as those of the corresponding commands in the editing window in the "vocal notes" mode toward all phrases in the vocal file. Incidentally, when the voice processing unit 19 has found it from the block map list pointer in the phrase directory during the voice playback that the phrase voice data does not exist in the vocal RAM file because of the up-load operation ascribable to the insufficient capacity of the vocal RAM file, it executes the down-load processing of the phrase voice data described as to the "restore" processing and plays back the voice while down-loading the phrase voice data in the vocal RAM file.

When, in the voice playback, the operator selects the command "original voice playback" or it simultaneously playback" while successively designating a plurality of icons displayed on the display 1, the voice processing unit 5 performs the "multiplexed playback" or "multiplexed simultaneous playback" processing in Fig. 12 while storing the designated vocal data in the information processing storage unit 6 and the vocal RAM file as stated before, thereby to play back a plurality of voices in multiplexed fashion.

Further, when the command "attribute setting" in the pop-up menu 135 is selected, the voice processing unit 5 executes the same processing as that of the command "attribute" of the editing window, thereby to display the attribute control window shown in Fig.16 and to perform the processing of setting the recording/playback conditions of the voice. In addition, when the command "editor" is selected, the voice processing unit 19 displays the editing window and performs the voice editing processing described before. The command "erase" in the pop-up menu 135 is a command for erasing the voice indicated by the icon. When this command "erase" is selected, the voice processing unit 5 performs the processing described as to the command "restore" and erases the vocal file from the vocal RAM file. Subsequently, it erases all of phrase voice data files contained in the vocal data management information area of the voice, from the filing unit 7. Thereafter, it erases the file storing the vocal data management information, from the filing unit 7. Lastly, it erases the displayed icon and the display position information of the icon stored in the information processing storage unit 6. Then, the processing of the command "erase" is ended.

Meanwhile, the command "move" in the pop-up menu 135 is a command for moving the icon, namely, the position where the voice has been afforded. When the command "move" is selected, the information processing unit 5 moves the icon to the input position from the position input device 3 and displays it until a position is thereafter settled by the position input device 3 (for example, until a button is turned off in the case of a mouse). After the settlement of the position, the unit 5 stores the display position information of the icon in the information processing storage unit 6.

Thus far, the processing of the functions of disposing of the vocal data already bestowed on the document or the like has been explained. Next, there will be described the processing contents concerning the functions of the embodiment of the present invention comprised for the voice recorded separately.

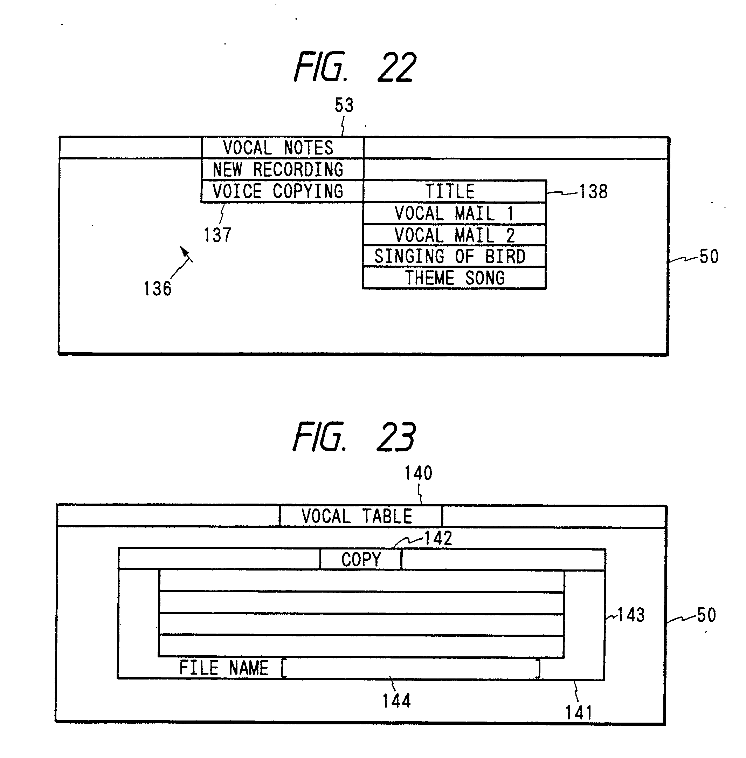

Fig. 2 has referred to the embodiment in which the voice is recorded in the site and bestowed on the document or the like by the use of the editing command. The embodiment in the case where the voice already recorded is bestowed on the document or the like, is shown in Fig. 22. Referring to Fig. 22, when the operator designates that position 136 in a window 50 displaying the document or the like on which the voice is to be bestowed, by the use of the position input device 3 and thereafter selects the "vocal notes" 53 of a command menu column, the information processing unit 5 displays a pop-up menu 137. Subsequently, when the operator selects "new recording" in the menu, the information processing unit 5 performs the processing described with reference to Fig. 2 and affords the voice. On the other hand, when the operator selects "voice copying" in the menu 137, the information processing unit 5 reads out information on a plurality of vocal data items already recorded, from the filing unit 7 and displays the read-out information items in a list 138 shown in Fig. 22. Subsequently, it awaits the operator's selection of any voice to be copied from the list 138 and then afforded, with the position input device or the like. When the voice is selected, the information processing unit 5 copies a file storing the data of the voice, in the filing unit 7 under a different name and stores the file name and the information of the position 136 in the information processing storage unit. Thereafter, it erases the pop-up menu 137 and the list 138 from the window 50 and displays the icon at the position 136. Then, the "vocal notes" processing based on the command "voice copying" is ended.

Now, an embodiment shown in Fig. 23 will be described. In the embodiment illustrated in the figure, the information processing unit 5 displays information on a plurality of vocal data items already recorded in a window 50, in the list 143 of a window 141, and it copies and accumulates any of the vocal data items selected with the position input device 3 or the like, in the filing unit under a file name received from the image scanner 4 and displayed in a file name input column 144 shown in the figure.

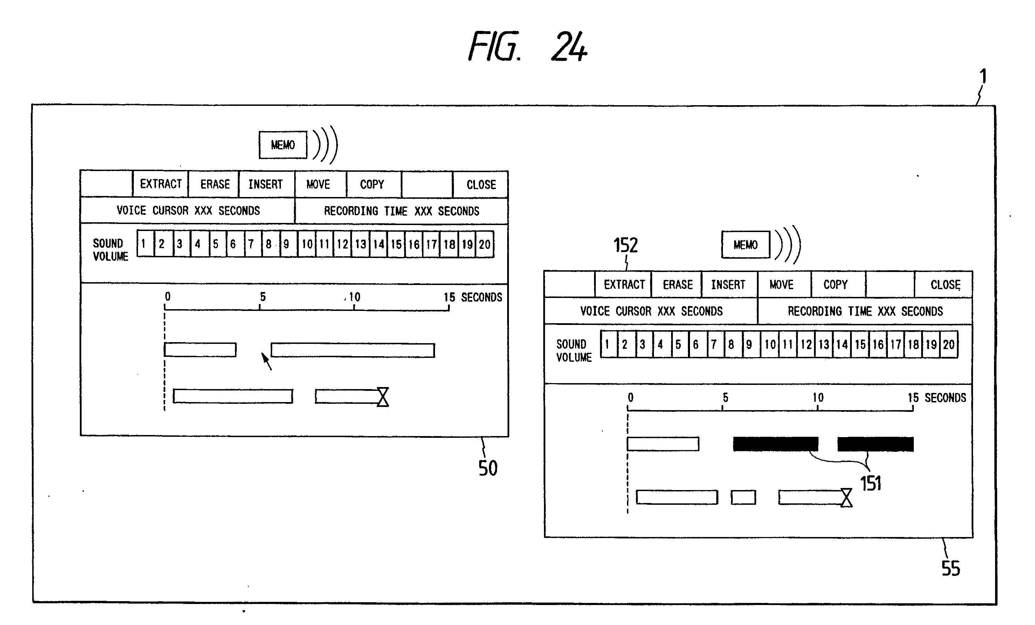

Further, Fig. 24 shows an embodiment in the case where two editing windows are simultaneously operated and where a plurality of phrase voice data items 151 designated in the additional editing window 55 are copied in a designated place within the noted editing window 50. When, at the stage of editing a voice with the editing window 50, the operator wants to copy the specified phrase voice of a different voice, he/she opens the editor 55 of the voice to-be-copied in accordance with, e. g., the method shown in Fig. 21. Subsequently, he/she selects the command "edit" of the window 55, thereby causing the window 55 to select the editing command described with reference to Fig. 3. When, under such a status, the information processing unit 5 recognizes the phrase voice to be handled by the command designated through the above processing by the operator and a command "extract" is selected by the operator, the unit 5 temporarily stores the file name of the voice to-be-copied, No. of the head phrase to-be-extracted and the number of phrases in the information processing storage unit 6. Subsequently, when the command "copy" of the editing window 50 has been selected by the operator, the unit 5 investigates if extracted vocal data is temporarily stored in the information processing storage unit 6. When the extracted vocal data is stored, it is copied at the position of the editing window 50 designated after the selection of the command "copy", by the copying processing described before. The temporary storage of the extracted vocal data in the information processing storage unit 6 is erased after the execution of any command selected following the command "extract" in the editing window.

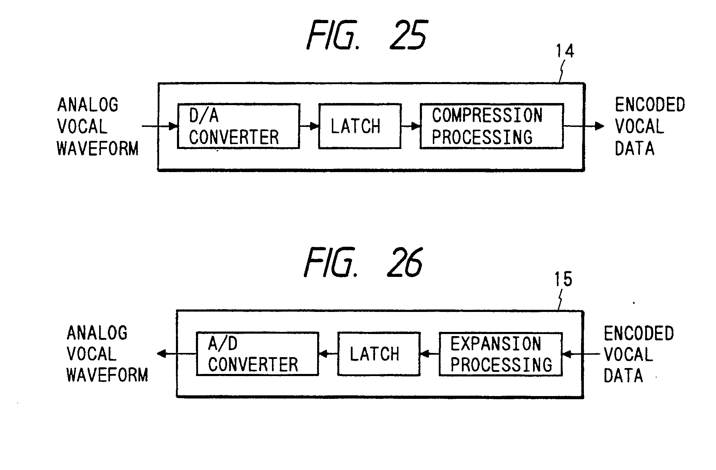

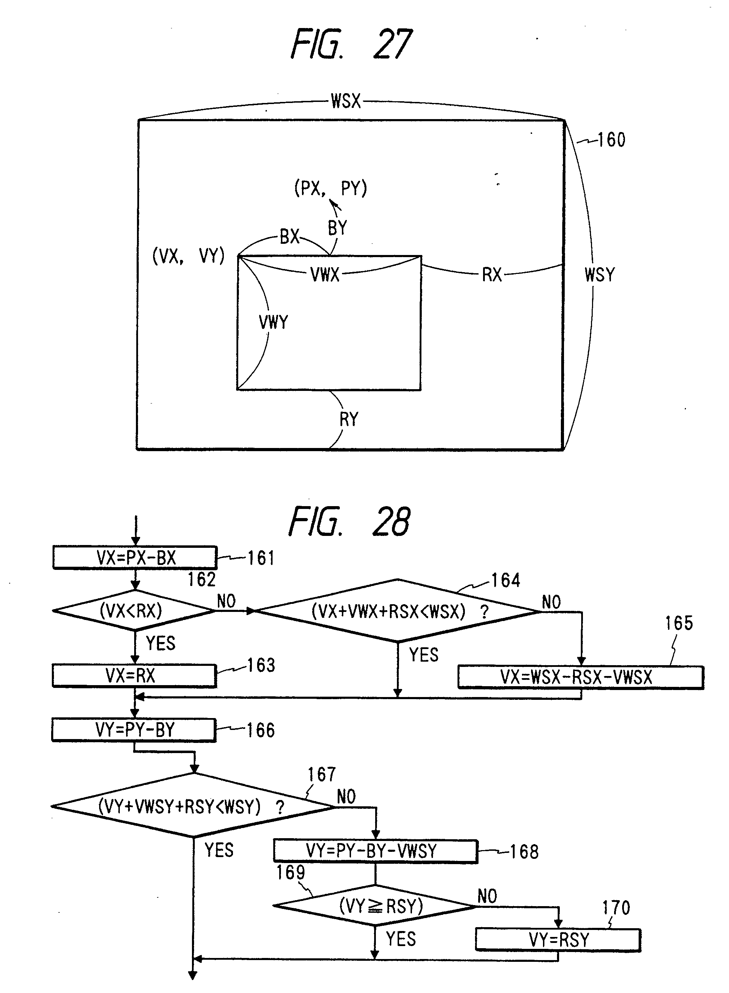

In the above, there have been described the processing contents on the functions which the embodiment of the present invention has for the voice recorded separately. Although, in the embodiment shown in Fig. 1, all processing procedures such as the processing of A/D conversion and the processing of compressing vocal data after the A/D conversion as shown in Fig. 25 are performed by the encoder 14, the processing except the A/D conversion processing, such as the vocal data compression processing, may well be executed by the voice processing unit 19. The same is also possible for vocal decoding shown in Fig. 26.

Lastly, processing contents in the case where the information processing unit 5 automatically allocates a voice editing window on the basis of designated positional information will be described with reference to Figs. 27 and 28. In Figs. 27 and 28, WSX and WSY denote the lateral width and vertical width of the displayable region of the display 1, PX and PY the coordinates of a designed position, VX and VY the coordinates of the display origin of a voice editing window in the displayable region 160, VWX and VWY the lateral width and vertical width of the voice editing window, BX and BY bias values from the designated position coordinates to the display origin coordinates of the voice editing window, and RX and RY the minimum spacings which ought to be held between the displayable region 160 and the editing window, respectively. Here, the relations of the following inequalities are assumed to be met:

$$RX + VWX < WSX \qquad (7)$$
$$RY + VWY < WSY \qquad (8)$$

First, the value VX is determined. If, with the editing window allocated as shown in Fig. 27, the left spacing between the displayable region 160 and the editing window is smaller than the value RX, is examined (steps 161, 162). When the former is smaller than the latter, the value RX is set as the value VX (step 163). Otherwise, if the right spacing between the displayable region 160 and the editing window is greater than the value RX is examined (step 164). When the former is not greater than the latter, the value VX is set at a position at which the right spacing is made the value RX (step 165). When the former is greater, a position found by subtracting the value BX from the value PX is set as the value VX. Subsequently, the value VY is determined. If, with the editing window allocated as shown in Fig. 27, the lower spacing between the displayable region 160 and the editing window is greater than the value RY, is checked (steps 166, 167). When the former is greater than the latter, the result of the step 166 is set as the value VY. Otherwise, if the upper spacing between the displayable region 160 and the editing window is greater than the value RY when the editing window is allocated above the value PY, is checked (steps 168, 169). When the upper spacing is greater than the value RY, the result of the step 168 is set as the value VY, and when not, the VY is set at the value RY.

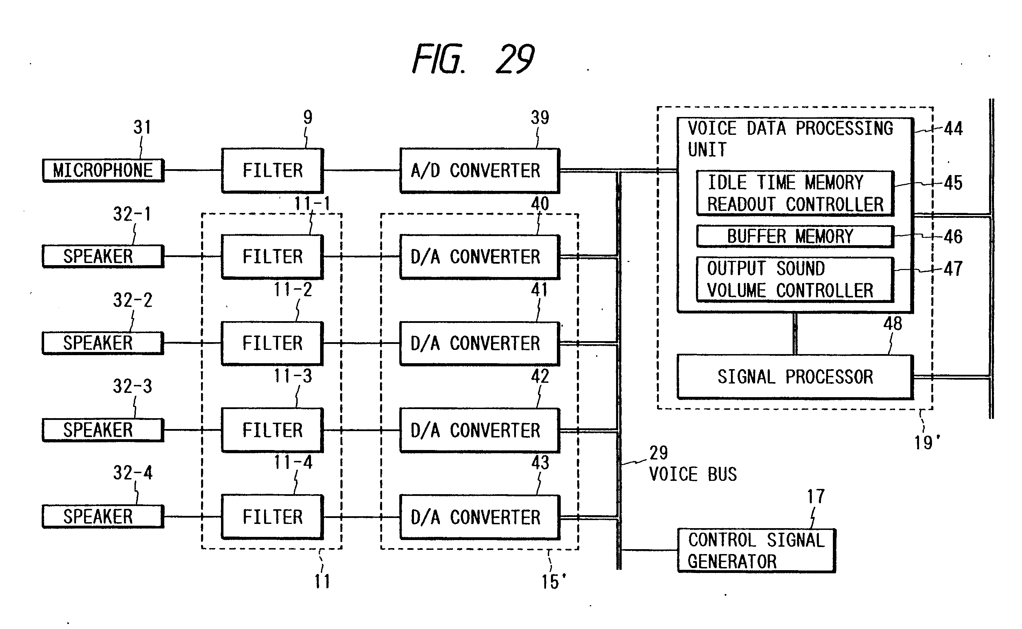

Next, there will be detailed an expedient by which the sound thus recorded or a synthesized sound is emitted in a stereo aspect. In the embodiment, the stereo sound is realized by using a plurality of voice output devices (32-1, 32-2, 32-3, 32-4). In Fig. 29, numeral 48 denotes a signal processor which performs the processing of encoding and compressing the A/D-converted voice data, the processing of decoding the encoded sound signal, the processing of synthesizing a sound, etc. Numeral 44 denotes voice data processing means for performing, e.g., the transfer control of the voice data from the A/D converter 39 to the information processing unit 5 or the signal processor 48, and the transfer control of the data from the information processing unit 5 or the signal processor 48 to the D/A converter 40, 41, 42, or 43. Shown at numeral 32 is a CD (compact disk) device.

Here, the various means are coupled by a main bus 30 or sound bus 31 which consists of data, address and control lines.

Further, the voice data processing unit 24 includes output sound volume controller 47 for controlling the individual output sound volumes of the plurality of voice output devices, buffer memory 46 for temporarily storing the voice data, and **idle** time memory readout controller 45 for performing an idle time control and reading out the voice data from the buffer memory 46.

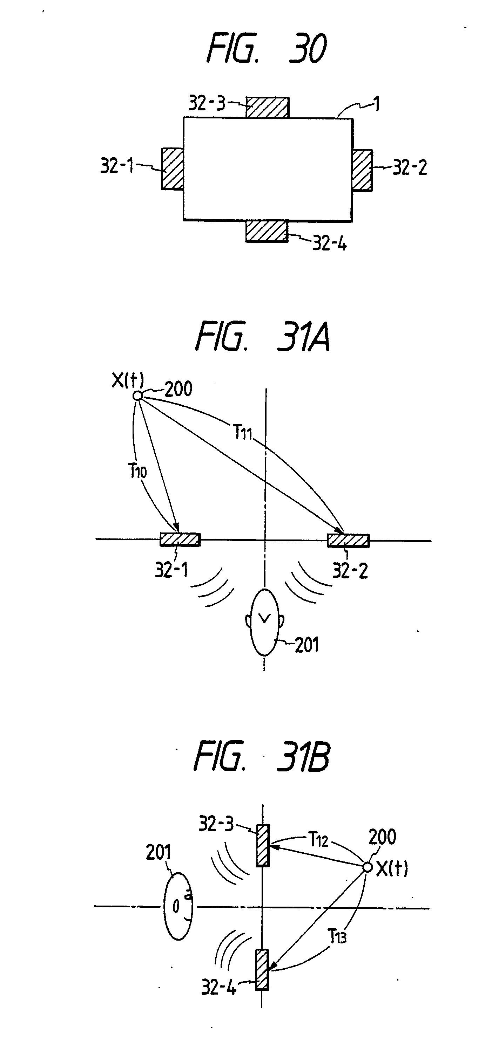

Besides, in this embodiment, the plurality of voice output devices 32-1, 32-2, 32-3 and 32-4 are assumed to be arranged at the right and left of the display 1 and over and under it as shown in Fig. 30.

Incidentally, it is assumed that each of the information processing unit 5 and the voice data processing unit 24 is constructed of a conventional microprocessor (for example, "68000" of Motorola, Inc. or "8086" of Intel, Inc.), while the signal processor is constructed of a digital signal processing unit such as "TMS32020" of Intel, Inc.

First, the principle of rendering the sound a pseudo-stereo sound will be described with reference to Figs. 31A and 31B. Fig. 31A is a top view showing the positional relationship among the user 201, the acoustic output devices 32-1 and 32-2 in Fig. 30, and a sound source 200. on the other hand, Fig. 31B is a top view showing the positional relationship among the user 201, the acoustic output devices 32-3 and 32-4 in Fig. 30, and the sound source 200.

The human function of localizing a sound source by both the ears has been investigated in the fields of psychology and physiology, and it is known that man perceives the position of the sound source owing to the time difference (phase difference) and sound pressure difference of sounds which enter both the ears. Referring to Fig.31A by way of example, when $T_{10}$ is let denote the period of time in which a sound emitted from the sound source 200 arrives at the position of the acoustic output device 32-1, a sound $Y_{10}(t)$ at the position of the acoustic output position 32-1 is expressed by the following equation:

$$Y_{10}(t) = K/T_{10} \times X(t - T_{10}) \qquad (9)$$

Here, K denotes a constant, t a point of time, and X(t) the sound of the sound source 200.

Likewise, when $T_{11}$ is let denote the period of time in which the sound emitted from the sound source 200 arrives at the position of the voice output device 32, a sound $Y_{11}(t)$ at the position of the voice output device 32 is expressed by the following equation:

$$Y_{11}(t) = K/T_{11} \times X(t - T_{11}) \qquad (10)$$

Accordingly, the user can aurally perceive the position of the sound source in such a way that the voice output devices 32-1 and 32-2 are arranged at lateral equal intervals with respect to the user and near him/her, and that the sounds of Eq. (9) and Eq. (10) are respectively given forth from the voice output devices 32-1 and 32-2. That is, it becomes possible to produce a sound depth in the horizontal direction.

Further, as illustrated in Fig. 31B, the voice output devices 32-3 and 32-4 are arranged over and under the front of the user 201, at vertical equal intervals with respect to the user and near him/her, and the sounds of Eq. (11) and Eq. (12) are respectively given forth from the voice output devices 32-3 and 32-4, whereby the user is permitted to perceive an aural stereo feeling.

$$Y_{12}(t) = K/T_{12} \times X(t - T_{12}) \qquad (11) \qquad Y_{13}(t) = K/T_{13} \times X(t - T_{13}) \qquad (12)$$

Here, $T_{12}$ in Eq. (11) and $T_{13}$ in Eq. (12) denote the periods of time in which the sound emitted from the sound source 200 arrives at the positions of the respective acoustic output devices 32-3 and 32-4.

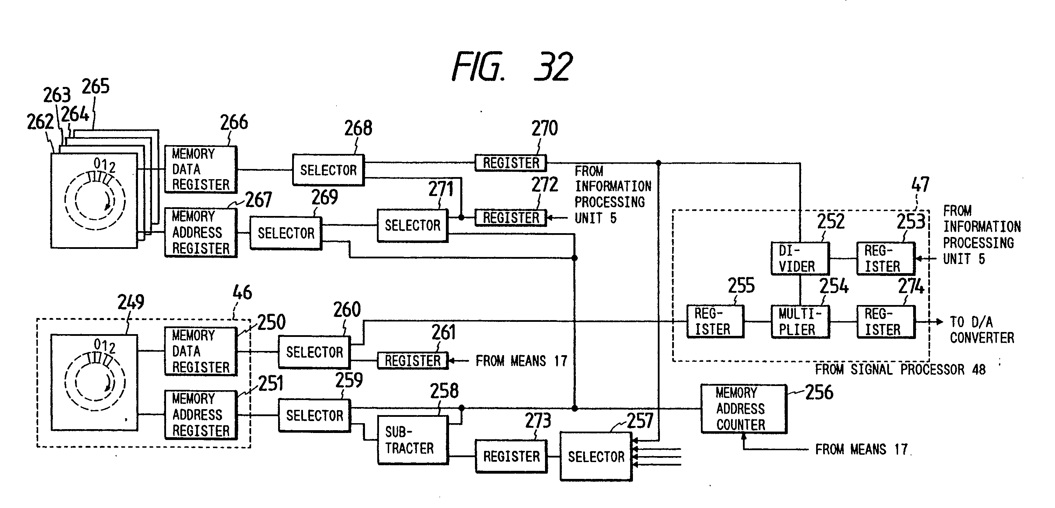

The processing stated above is performed within the voice data processing unit 44 in Fig. 29. One detailed embodiment of this unit is shown in Fig 32.

The circuit arrangement in Fig. 32 is configured of three sections; the buffer memory 46 composed of blocks 249-251, the output sound volume controller 47 composed of blocks 252-255, and the idle time memory readout controller 45 composed of the other portions.

First, an expedient for realizing the term $X(t - T_{10})$ of Eq. (9) will be explained. In the present invention, this term is realized using the buffer memory 46.

The buffer memory 46 is a memory for temporarily storing the quantity X(t) which is the voice data.

This memory 46 writes the content of the memory data register 250 into that address of the memory 249 which is set in the memory address register 251, or loads the content of the address in the memory data register 250. The memory address register 251 is composed of a plurality of bits, and handles values in a plus value. Accordingly, when the address has overflowed the most significant bit in consequence of being incremented one by one, the value of the register begins to increase from 0 again. That is, ringlike accesses as indicated in Fig. 32 are possible. The content of the memory address counter 256 expresses the address corresponding to the period of time $t$, and is incremented one by one in conformity with the signal of the cycle signal generation means 17.

In such circumstances, the buffer memory 46 first controls a selector 260 so as to write the content of a register 261 into the memory data register 250. The value of the sound X(t) is written into the register 261 on occasion by the information processing unit 5. In parallel with the above operation, the memory 46 controls a selector 259 so as to write the content of a memory address counter 256 into the memory address register 251. Subsequently, the buffer memory 46 is so controlled that the content of the memory data register 250 is written into the address of the memory 249 indicated by the memory address register 251.

After the values of the quantity X(t) have been written into the memory 249 in this way, the value of the quantity $X(t - T_{10})$ is read out of the memory 249 by the following processing: First, the voice data processing unit 44 controls a subtracter 258 so as to subtract the time $T_{10}$ set in a register 273, from the content of the memory address counter 256 by an expedient to be described later, and it controls the selector 259 so as to write the output of the subtracter 258 into the memory address register 51. Subsequently, the unit 24 controls the buffer memory 26 so as to load the memory data register 250 with the data of the memory 249 specified by the memory address register 251, that is, the value of the sound X the time $T_{10}$ before, and it controls the selector 260 so as to set the preceding value in the register 255.

Thus far, the expedient for realizing the term $X(t - T_{10})$ of Eq. (9) has been explained. Next, there will be described an embodiment of the output sound volume control means 47 for executing the calculation $K/T_{10} \times X(t - T_{10})$ in Eq. (9).

The voice data processing unit 44 controls the divider 252 so as to divide the content $T_{10}$ of a register 270 read out and set by an expedient to be described later, by the content K of the register 253. The content K of the register 253 is set by the information processing unit 5. Further, the unit 44 controls the multiplier 254 so as to multiply the output of the divider 252 and the content $X(t - T_{10})$ of the register 255 and to set the product, namely, $Y_{11}(t)$ in a register 274.

The sound $Y_{11}(t)$ thus obtained is sent from the register 274 to the D/A converter 40 via the sound bus 29 by the voice data processing unit 44 and is converted into an analog signal, which is emitted from the voice output device 32-1 via the filter 11-1.

In the above, one embodiment concerning Eq. (9) has been explained. In this regard, however, the time $T_{10}$ is not generally a constant, but it is expressed by a time-varying function $T_{10}(t)$.

Now, an embodiment for realizing this function will be described with reference to Fig. 32.

In this embodiment, as stated before, the quantity X(t) is written into the memory 249 at the point of time t, and the value written the period of time $T_{10}$ before the point of time t is readout. In other words, the value $T_{10}$ is used for the processing of the term $X(t - T_{10})$ after the period of time $T_{10}$ since the point of the time at which the quantity X(t) was written. In the present invention, therefore, an idle time controlling memory 262 in Fig. 32 is comprised so as to realize the processing.

The voice data processing unit 24 first adds the content of the memory address counter 256 and the value of the function $T_{10}(t)$ set in a register 272 by the information processing unit 5, and it controls a selector 269 so as to set the sum in a memory address register 267. In parallel with this operation, the unit 44 controls a selector 268 so as to set the content of the register 272 in a memory data register 266. Thereafter, it writes the content of the memory data register 266 into that address in the idle time controlling memory 262 which is indicated by the memory address register 267.

Upon ending this operation, the unit 44 further controls the selector 269 so as to set the content of the memory address counter 256 in the memory address register 267 and to load the memory data register 266 with the content of the address of the idle time controlling memory 262 indicated by the memory address register 267. Subsequently, it controls the selector 268 so as to set the content of the register 266 in the register 270.

Thus far, the detailed expedient of one embodiment concerning Eq. (9) has been described with reference to Fig. 32. Regarding Eqs. (10) thru (12), processing similar to that of Eq. (9) is performed in such a way that idle time controlling memories are provided for the respective equations.and that the output sounder controller 47 and the idle time memory readout controller 45 are used in time-division fashion. Then, the stereo playback of the sound is realized.

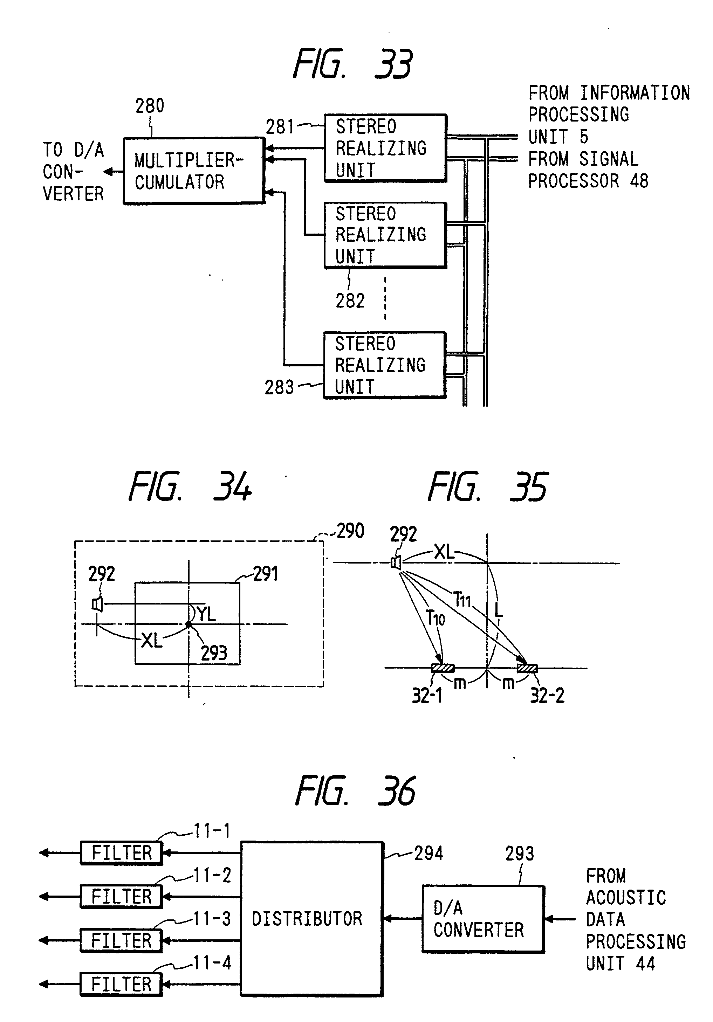

By the way, the signal processor 48 decodes the recorded items of encoded and compressed voice data transferred from the information processing unit 5, in accordance with the method of the standard CCITT G.721 ADPCM, and it sets the decoded data items in the register 261 shown in Fig. 33, at the timings of the outputs of the controller. Besides, the signal processor 48 synthesizes a sound by the use of a method disclosed in, e. g., Japanese Patent Application Publication No. 14360/1985 or No. 15402/1972 and sets the synthesized sound in the register 261 in Fig. 33 at the output timing of the controller. These procedures of processing in the signal processor 48 are changed over through the main bus 28 by the information processing unit 5.

In a further embodiment, as illustrated in Fig. 33, a plurality of stereo mode realizing unit as shown in Fig. 32 are comprised, and the time divisional control is performed, whereby a plurality of sounds recorded, played back and synthesized by the signal processor 48 are brought into stereo sounds under conditions set by the information processing unit 5. The summation of the stereo sounds is found by a multiplier-accumulator 280, the output of which is delivered to the D/A converter.

Next, an example of application of the present invention will be described with reference to Fig. 34. The figure shows a layout diagram in which the front of the display 1 is viewed. In Fig. 34, numeral 290 denotes the virtual screen of the virtual terminal, which is generated by the display processing unit 2 in accordance with the instruction of the information processing unit 5 and which displays characters, patterns, pictures and/or sounds. As stated before, the display processing unit 2 extracts a part of the virtual screen as the field of view in accordance with the instruction of the information processing unit 5 and displays it as a window 91 on the screen of the display 1 being the actual terminal. Numeral 291 in Fig. 34 denotes this window. Further, numeral 292 denotes an icon which indicates the existence of acoustic data. Since, however, the icon 292 is not displayed in the window 291, the user does not know the existing position of the icon.

There will be explained the contents of processing in which, under such a situation, the user is informed of the existing position of the icon in Fig. 34, namely, that of the voice data by utilizing the sense of distance based on a stereo sound in accordance with the expedient of the present invention. The information processing unit 5 manages the coordinates of the objects to-be-displayed as shown in Fig. 34, in both the coordinate system of the actual screen of the display 1 and that of each individual virtual screen. Here, the information processing unit 5 calculates the differences between the display coordinate values of the icon 292 and the origin 293 of the coordinate system of the actual screen of the display 1, thereby to find XL and YL which are the components of the distance between the origin 293 and the icon 292.

In order to afford the sense of distance, a virtual depth distance L is introduced as is indicated in Fig. 35, and a stereo feeling is generated.

Referring to Fig. 35, numerals 32-1 and 32-2 denote the voice output devices 32-1 and 32-2 shown in Fig. 31A. The information processing unit 5 examines the value of the component XL and executes operations expressed by the following equations, to find the periods of time $T_{10}$ and $T_{11}$ which have been elucidated in Fig. 31A and which are set in the register 272 shown in Fig. 32.

(1) For XL < 0;

$$T_{10} = \sqrt{(XL - m)^2 + L^2} \qquad (13)$$
$$T_{11} = \sqrt{(XL + m)^2 + L^2} \qquad (14)$$

(2) For XL ≧ 0;

$$T_{12} = \sqrt{(XL - m)^2 + L^2} \qquad (15)$$
$$T_{13} = \sqrt{(XL + m)^2 + L^2} \qquad (16)$$

The information processing unit 5 calculates the delivered sounds in the vertical direction of the screen, in other words, to the acoustic output devices 32-3 and 32-4 shown in Fig. 31B by the same procedures of processing as mentioned above, except that XL in Eqs. (13) - (14) is substituted by XL, and it sets the calculated results in the register 272 shown in Fig. 32.

Owing to such processing, the sound put into the stereo aspect is emitted from the plurality of acoustic output devices, whereby the user is informed of the existing position of each object on the display. Moreover, by setting the distance L in Fig. 34 in the depthwise direction of the object, the motion of this object in a three-dimensional space can be aurally transmitted to the user.

The embodiment of the present invention shown in Fig. 29 has mentioned the example in which the plurality of sets each consisting of the filter and the D/A converter are comprised for the stereo output mode. However, it is also possible to adopt a construction as shown in Fig. 36, in which a single D/A converter 293 is comprised and is operated under a time-divisional control, and the outputs thereof are delivered to the filters 11-1 - 11 - 3 shown in Fig. 29 by the use of a distributor 294.

According to the information processing system of the present invention, processing such as the editing of voice can be performed while information items for use in the vocal editing are being displayed together with other information as may be needed, and a plurality of voices can be edited simultaneously and multifariously. Besides, since the system comprises means permitting an operator to visually grasp statuses such as the recording/playback of voice in real time and means permitting him/her to readily alter recording/playback conditions, the voice processing can be performed under conditions suited to an environment. In addition, voices can be recorded continuously in real time until file unit for accumulating recorded data becomes filled up, so that the voices can be recorded without caring about a recording time. Since the system comprises the function of managing vocal data in phase unit shorter than sentence unit, random and fine voice editing can be done. Further, emotion and presence can be enhanced by stereo playback to promote understanding of the contents of images of documents, catalogues, etc. expressed in multi-media fashion and displayed on display, and the aural sense of distance based on the stereo aspect can be utilized to inform a user of the existing position of an object to-be-manipulated or noted in terms of a sound, whereby a more convenient system exploiting the merits of sounds can be realized.

## Claims

1. An information processing system for adding voice notes to a document which is displayed on a screen, and for editing and playing-back said voice notes, comprising:
display means for displaying a document on a screen;
multiwindow display processing means for controlling said display means to divide screen into a plurality of partial regions forming windows and for operating each window as an independent display;
operation specifying means for specifying operations to be performed on said document, including operation menus for vocal notes to be added to said document;
information processing means for performing generation, editing and accumulation of said document in accordance with specified operations, including means for controlling said multiwindow display processing means so that said display means may display on said screen indications of operations visually expressed for vocal data processing hierarchically in several separate windows in a menu specified by said operation specifying means for a voice note;
information processing storage means for storing data items for use in said information processing means;
a voice input/output channel for inputting a voice message to be added as a voice note to place in said document and for outputting a voice note as a voice message;
voice processing means for controlling inputting and outputting of voice messages in said voice input/output channel and for converting between voice notes and voice messages in accordance with a signal from said information processing means; and
voice processing storage means for storing vocal data corresponding to a voice note received as a voice message in said voice input/output channel.

2. An information processing system according to claim 1, wherein said information processing means controls said multiwindow display processing means so that said operation menus for voice notes are comprised within said windows.

3. An information processing system according to claim 1, wherein said voice processing storage means includes management storing means for storing management information for a plurality of types of vocal data items having different contents.

4. An information processing system according to claim 1, wherein said voice processing storage means includes recording condition storage means for storing recording condition data items which include conditions for determining a voiced/unvoiced state and which are read out of said information storage means under control of said information processing means.

5. An information processing system according to claim 1, further comprising an interface which includes means for preventing a conflict between an access from said information processing means to said voice processing storage means and an access from said voice processing means to said voice processing storage means, means for effecting access from said information processing means to said voice processing means, and means for effecting access from said voice processing means to said information processing means, whereby document processing by said information processing means and voice processing by said voice processing means are performed simultaneously.

6. An information processing system according to claim 1, wherein said voice processing means further includes means for determining an available capacity in said voice processing storage means for storing vocal data and for controlling said information processing means to save vocal data in said information processing storage means, thereby to secure a storage area which is required for subsequent voice processing when said capacity is less than a required amount.

22

7. An information processing system according to claim 6, wherein the vocal data which is saved is vocal data without voice annotated on a document being edited.

8. An information processing system according to claim 6, wherein said voice processing means performs said saving of vocal data each time a voice editing instruction is issued by said information means.

9. An information processing system according to claim 1, wherein said voice processing storage means stores vocal data in a hierarchic structure.

10. An information processing system according to claim 1, wherein said voice processing means further includes means for emitting stereo sounds.

11. An information processing system for adding voice notes to a document which is displayed on a screen, and for editing and playing-back said voice notes, comprising:

a display unit for displaying a document on a screen;

a multiwindow display processor for controlling said display unit to divide said screen into a plurality of partial regions forming windows and for operating each window as an independent display;

operation specifying means for specifying operations to be performed on said document, including operation menus for vocal notes to be added to said document;

an information processor for performing generation, editing and accumulation of said document in accordance with specified operations including means for controlling said multiwindow display processor so that said display unit may display on said screen indications of operations visually expressed for vocal data processing hierarchically in several separate windows in a menu specified by said operation specifying means for a voice note;

an information processing storage for storing data items for use in said information processor;

filing means for accumulating documents;

a voice input/output channel for inputting a voice message to be added as a voice note to a place in said document for outputting a voice note as a voice message;

a voice processor for controlling inputting and outputting of voice messages in said voice input/output channel and for converting between voice notes and voice messages in accordance with a signal from said information processor;

a voice processing storage for storing vocal data corresponding to a voice note received as a voice message in said voice input/output channel, wherein said voice processing storage includes a management storage for storing management information for a plurality of types of vocal data items having different contents; and

an interface for performing simultaneously document processing by said information processor and voice processing by said voice processor.

12. An information processing system according to claim 11, wherein said interface includes means for preventing a conflict between an access from said information processor to said voice processing storage and an access from said voice processor to voice processing storage, means for effecting access from said information processor to said voice processor, and means for effecting access from said voice processor to said information processor.

13. An information processing system, comprising:

display means for displaying a document including characters, patterns and pictures on a display screen;

multiwindow display processing means for controlling said display means to divide screen into a plurality of partial regions forming windows and for operating each window as an independent display;

input means for inputting data representing said characters, patterns and pictures;

pointing means for pointing to a position on said display screen so as to specify an operation displayed in menus displayed on said screen, including an operation menu for adding voice notes to said document;

information processing means for performing generation, editing and accumulation of said document in accordance with specified operations including means for controlling said multiwindow display processing means so that said display means may display on said display screen indications of operations visually expressed for vocal data processing hierarchically in several separate windows in an menu pointed to by said pointing means for a voice note;

information processing storage means for storing data items for use in said information processing means;

filing means for accumulating said documents processed by said information processing means;

a voice input/output channel for inputting a voice message to be added as a voice note to a place in said document and for outputting a voice note as a voice message, said channel including a voice input device, a first filter for frequency filtering a voice signal inputted by said input device, a voice encoder for sampling an output signal of said first filter and for converting said sampled signal into a digital signal, a voice decoder for restoring said encoded signal to an analog signal, a second filter for amplifying and frequency filtering an output signal of said voice decoder, a control signal generator for generating a control signal for repeating said decoding and encoding in successive predetermined frames;

voice processing means for controlling operations of inputting and outputting voice messages in said voice input/output channel in accordance with a signal of said information processing means; and

voice processing storage means for storing vocal data corresponding to a voice note received as a voice message by said voice input/output channel.

14. An information processing system according to claim 13, wherein said voice input/output channel further includes a voice analyzer for analyzing an output signal of said first filter and for delivering a signal indicating a level of said inputted voice signal a result of a voiced/unvoiced decision each frame.

15. An information processing system according to claim 14, wherein said voice processing means includes means for reading frame voice data items delivered from said analyzer and encoder in each frame in accordance with a voice recording instruction from said information processing means and for storing said frame voice data items in said voice processing storage means.

16. An information processing system according to claim 13, wherein said voice processing storage means includes management storage means for storing management information for a plurality of different types of vocal data items having different contents.

17. An information processing system according to claim 16, wherein said voice processing storage means further includes recording condition storage means for storing recording condition data items which include conditions for making a voiced/unvoiced state decision and which are read out of said information storage means under the control of said information processing means, and playback condition storage means for storing management information for playing-back.

18. An information processing system according to claim 13, wherein said voice decoder includes means for multiplexing a plurality of decoded voice signals.

19. An information processing system according to claim 13, wherein said voice decoder includes means for changing a tone quality of a decoded voice signal.

20. An information processing system according to claim 13, wherein said voice processing means includes means for performing compression processing of a digital voice signal.

21. An information processing system according to claim 13, wherein said voice processing means includes means for performing expansion of an encoded signal.

22. An information processing system according to claim 13, wherein said information processing means includes means for controlling said multiwindow display processing means so as to allocate a window use in editing an inputted voice in an editing window serving as one of the voice processing windows, near a position indicated from said pointing means at the request for processing vocal data and within the framework of said display screen.

23. An information processing system according to claim 14, wherein said information processing means is connected to receive outputs of said voice analyzer at intervals which are integral times said frame in each of recording and playback modes for controlling said multiwindow display processing means so as to visually display a level of an inputted voice signal in an editing window serving as one of the voice processing windows.

24. An information processing system, comprising:

display means for displaying a document including characters, patterns and pictures on a display screen;

multiwindow display processing means for controlling said display means to divide screen into a plurality of partial regions forming windows and for operating each window as an independent display;

input means for inputting data representing said characters, patterns and pictures;

pointing means for pointing to a position on said display screen so as to specify an operation displayed in menus displayed on said screen, including an operation menu for adding voice notes to said document;

information processing means for performing generation, editing and accumulation of said document in accordance with specified operations including means for controlling said multiwindow display processing means so that said display means may display on said display screen indications of operations visually expressed for vocal data processing hierarchically in several separate windows in an menu pointed to by said pointing means for a voice note;

information processing storage means for storing data items for use in said information processing means;

filing means for accumulating said documents processed by said information processing means;

a voice input/output channel for inputting a voice message to be added as a voice note to a place in said document and for outputting a voice note as a voice message, said channel including a voice input device, a first filter for frequency filtering a voice signal inputted by said input device, a voice encoder for sampling an output signal of said first filter and for converting said sampled signal into a digital signal, a voice decoder for restoring said encoded signal to an analog signal, a second filter for amplifying and frequency

EP 0 402 911 A2

filtering an output signal of said voice decoder, a control signal generator for generating a control signal for repeating said decoding and encoding in successive predetermined frames, a voice analyzer for analyzing an output signal of said first filter and for delivering a level of said inputted voice signal a result of a voiced/unvoiced decision in each frame;

voice processing means for controlling operations of inputting and outputting voice messages in said voice input/output channel in accordance with a signal of said information processing means; and

voice processing storage means for storing vocal data corresponding to a voice note received as a voice message by said voice input/output channel, wherein said voice processing storage means includes management storage means for storing management information for a plurality of types of vocal data items having different contents.

25. An information processing system according to claim 24, wherein said voice processing means includes means for starting said analyzer and voice encoder when said voice processing means receives a voice recording start instruction for adding a voice note to a document and for reading frame voice data items delivered from said analyzer and voice encoder in each frame and storing said frame voice data items in said voice storage means time-sequentially until said voice processing means receives a recording stop instruction from said information processing means.

26. An information processing system according to claim 25, wherein said voice processing means further includes means for detecting phonic and aphonic sections of said frame voice data items by use of said analyzed result and recording condition data items and stores a head address, which stores phrase voice data that consists of time-sequential frame voice data items stored until said analyzed result becomes aphonic and one-frame voice data item obtained by compressing said aphonic section and the number of said frame voice data items within said phrase voice data, in said management storage means.

25

# FIG. 1

INFORMATION PROCESSING UNIT — 5

INFORMATION PROCESSING STORAGE UNIT — 6

FILING UNIT — 7

IMAGE SCANNER — 26

23

24  25

28 MAIN BUS (DATA, ADDRESS AND CONTROL LINES)

MEMORY ACCESS CONFLICT PREVENTER

ACCESSER

ACCESSER

22

INTERFACE UNIT

18

VOICE PROCESSING STORAGE UNIT

21 — RECORDING CONDITION STORAGE AREA

27 — MANAGEMENT STORAGE AREA

PLAYBACK CONDITION STORAGE AREA — 35

MULTIWINDOW DISPLAY PROCESSING UNIT — 2

DISPLAY — 1

KEYBOARD — 4

MOUSE — 3

36

29 VOICE BUS (DATA, ADDRESS AND CONTROL LINES)

VOICE INPUT/OUTPUT CHANNEL

31 — MICROPHONE

8

9

ANALYZER — 20

TELEPHONE SET

SELECTOR

FILTER

ENCODER — 14

VOICE PROCESSING UNIT — 19

30

34 — VCR

32 — SPEAKER

10

SELECTOR

FILTER

DECODER — 15

11

CONTROL SIGNAL GENERATOR — 17

EP 0 402 911 A2

# FIG. 2

# FIG. 3

| | | EX-TRACT | ERASE | INSERT | MOVE | COPY | | |
|---|---|---|---|---|---|---|---|---|

56 COMMAND MENU

MESSAGE AREA

55 EDITING WINDOW

EP 0 402 911 A2

FIG. 4

EDITING WINDOW
55

| ATTRIBUTE | RECORD | STOP | PLAY | EDIT | STATUS | RESTORE | CLOSE |
|---|---|---|---|---|---|---|---|

56 COMMAND MENU

| VOICE CURSOR XXX SECONDS | RECORDING TIME XXX SECOND |
|---|---|

57

SOUND VOLUME

| 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|

58

62

0          5          10          15 SECONDS

APHONIC PART

59

PHONIC PART

60

EP 0 402 911 A2

# FIG. 5

EP 0 402 911 A2

## FIG. 6A

18

| SYSTEM AREA | ~70 |
|---|---|
| VOICE RAM FILE AREA | ~69 |

## FIG. 6B

**SYSTEM AREA** ~70

| VOCAL FILE DIRECTORY AREA POINTER |
|---|
| NUMBER OF WORDS IN AREA |
| PHRASE DIRECTORY AREA POINTER |
| NUMBER OF WORDS IN AREA |
| BLOCK MAP LIST AREA POINTER |
| NUMBER OF WORDS IN AREA |
| BLOCK DATA AREA POINTER |
| NUMBER OF WORDS IN AREA |
| BLOCK SIZE |
| |
| VOICE FILE ROUTE DIRECTORY ~63 |
| UNUSED VOCAL FILE ROUTE POINTER ~71 |
| UNUSED PHRASE ROUTE POINTER ~72 |
| UNUSED BLOCK ROUTE POINTER ~73 |

**VOICE RAM FILE AREA** 69

| VOICE FILE DIRECTORY AREA |
|---|
| PHRASE DIRECTORY AREA |
| BLOCK MAP LIST AREA |
| BLOCK DATA AREA |

EP 0 402 911 A2

## FIG. 7

EP 0 402 911 A2

VOCAL FILE (VOCAL DATA MANAGEMENT INFORMATION) — 74

PHRASE VOICE DATA FILE

| | | | |
|---|---|---|---|
| RECORDING AND PLAYING CONDITIONS (INCLUDING DATA AND TIME) | | | ~75 |
| NUMBER OF PHRASE (n) | | | ~76 |
| VOCAL LENGTH (OVERALL RECORDING TIME) | | ~80 | ~77 |

78

PHRASE 1 | VOCAL LENGTH | NUMBER OF FRAMES | PHRASE VOICE DATA FILE
PHRASE 2 | VOCAL LENGTH | NUMBER OF FRAMES | PHRASE VOICE DATA FILE

79

PHRASE n | VOCAL LENGTH | NUMBER OF FRAMES | PHRASE VOICE DATA FILE

PHRASE 1 — 76

PHRASE 2

PHRASE n

17

FIG. 8

POWER WAVEFORM
81

POWER THRESHOLD
VALUE 82

FRAME SIGNAL 83

VOICED/UNVOICED
RESULTS 84

PHONIC SECTION
85

86

CONSONANT SECTION
88

PHONIC/APHONIC
SECTION 89

VOWEL
FALL
SECTION

PHONIC SECTION (PHRASE)

87

APHONIC
SECTION

EP 0 402 911 A2

EP 0 402 911 A2

## FIG. 9

90

| VOICED/UN-VOICED FLAG | PHONIC/A-PHONIC FLAG | ·NUMBER OF APHONIC FRAMES |
|---|---|---|
| VOCAL POWER | | |
| ENCODED VOCAL DATA | | |

## FIG. 10

~VIRTUAL TERMINAL

PHRASE PHONIC-PART DISPLAY REGION

HEIGHT

WIDTH

REGIONAL ORIGIN

WINDOW ORIGIN

EDITING WINDOW

# FIG. 11

| NO. OF VOCAL PHRASE | ORIGIN OF PHRASE REGION | HEIGHT | WIDTH OF PHONIC PART | WIDTH OF APHONIC PART |
|---|---|---|---|---|
| | | | | |
| | | | | |
| | | | | |

# FIG. 12

56

| AT-TRIB-UTE | RECORD | STOP | PLAY | EDIT | STATUS | RE-STORE | CLOSE |
|---|---|---|---|---|---|---|---|
| | | | ORIGINAL VOICE PLAYBACK | | | | |
| | | | RAPID TALKING PLAYBACK | | | | |
| | | | MULTIPLEXED PLAYBACK | | | | |
| | | | MULTIPLEXED SYNCHRONOUS PLAYBACK | | | | |
| | | | CONVERTED TONE QUALITY PLAYBACK | | | | |

55

## FIG. 13

PHRASE DATA fvs ← ──── VOICE-1 PLAYBACK FRAME DATA POINTER ── 91

VOICE-1 PLAYBACK FRAME DATA ── 92

PHRASE DATA fve
VOICE 1

DECODING

(4) WEIGHTED MULTIPLY-AND-COMULATE OPERATION → 9

DECODING

15

VOICE m
PHRASE DATA fws ──── VOICE-m PLAYBACK FRAME DATA POINTER ── 93

PHRASE DATA fwe ──── VOICE-m PLAYBACK FRAME DATA ── 94

18

## FIG. 14

DECODED VOICE

OUTPUT VOICE

## FIG. 15

DECODED VOICE

OUTPUT VOICE

# FIG. 16

**ATTRIBUTE CONTROL** — 114 — 115 — STANDARD VALUE — RESTORE — 95 — CLOSE — 96

**RECORD**

**VOICED/UNVOICED DECISION**
- 1 MANUAL SETTING
- 2 AUTOMATIC SETTING
- 1 OFFICE
- 2 LABORATORY
- POWER THRESHOLD VALUE — 100 — dB

**APHONIC DECISION**
- IONSONANT SECTION — 101 — ms
- VOWEL FALL SECTION — 102 — ms
- VOICE SHORTEST SECTION — 103 — ms

**PHRASE/END-OF-PARAGRAPH DECISION**
- PHRASE — 104 — ms
- END OF PARAGRAPH — 105 — s

**SOUND VOLUME**
- 1 2 3 4 5 6 7 8 9 10 11 12 13 14 15 16 17 18 19 20 — 106
- — 107

**PLAY**

**PHRASE/END-OF-PARAGRAPH SETTING**
- PHRASE — 108 — ms
- END OF PARAGRAPH — 109 — s

**SOUND VOLUME**
- 1 2 3 4 5 6 7 8 9 10 11 12 13 14 15 16 17 18 19 20 — 110
- — 111

**SPEED**
- 1 2 3 4 5
- 1 : ORIGINAL SPEED  2 : 1.5 TIMES RAISED SPEED
- 3 : 2 DOUBLE SPEED  4 : 2.5 TIMES RAISED SPEED
- 5 : 3 TREBLE SPEED

**PITCH**
- 1 2 3 4 5

**TRIAL**
- 1 DONE  2 NOT DONE

97 — 98 — 112 — 113 — 99

EP 0 402 911 A2

## FIG. 17

| RECORD | STOP | PLAY | ERASE | CLOSE |

120 — (left label)  ----- 121

0  5  10  ----- 122

----- 123

## FIG. 18

125

126

| STATUS OF VOCAL RAM FILE |

《USED SITUATION OF VOCAL RAM FILE》

VOCAL FILE DIRECTORY : USED  REMAINING
AMOUNT XXX AMOUNT  XXX

PHRASE DIRECTORY : USED  REMAINING
AMOUNT XXX AMOUNT  XXX

DATA BLOCK : USED  REMAINING
AMOUNT XXX AMOUNT  XXX

127

《TRUCTURE OF VOCAL RAM FILE》

| VOCAL FILE NAME | PHRASE NO. | DATA BLACK NO. |
|---|---|---|
| VS10001 | 105 | 3 4 5 6 7 |
|  | 106 | 8 9 10 11 12 |
|  | 107 | 0 1 2 |
| VS10002 | 121 | 0 1 2 3 |
|  | 122 | 9 10 11 12 13 |

# FIG. 19

128
129
15
130

15
131

# FIG. 20

1

(JAPANESE PATENT
APPLICATION LAID-
OPEN NO. 59-9301)

| SUP-PLE-MENT | O-PIN-ION | END |

ICON

50

(JAPANESE PATENT
APPLICATION LAID-
OPEN NO. 59-9301)

| SUP-PLE-MENT | O-PIN-ION | END |

EP 0 402 911 A2

## FIG. 21

1

(JAPANESE PATENT APPLICATION LAID-OPEN NO. 9301/1984 | SUP-PLE-MENT | O-PIN-ION | END

54

MEMO )))

| ORIGINAL VOICE PLAYBACK |
| PLAYBACK STOP |
| RAPID TALKING PLAYBACK |
| TONE QUALITY CONVERSION |
| SIMULTANEOUS PLAYBACK |
| ATTRIBUTE SETTING |
| EDITOR |
| ERASE |
| MOVE |

135

50

(JAPANESE PATENT APPLICATION LAID-OPEN NO. 59-9301) | SUP-PLE-MENT | O-PIN-ION | END

MEMO )))

## FIG. 22

53

| | VOCAL NOTES | |
|---|---|---|
| | NEW RECORDING | |
| | VOICE COPYING | TITLE |
| | | VOCAL MAIL 1 |
| | | VOCAL MAIL 2 |
| | | SINGING OF BIRD |
| | | THEME SONG |

138

137

136

50

## FIG. 23

140

| VOCAL TABLE |
|---|

142

COPY

143

50

FILE NAME

144

141

# FIG. 24

EP 0 402 911 A2

MEMO )))

| | EXTRACT | ERASE | INSERT | MOVE | COPY | | CLOSE |
|---|---|---|---|---|---|---|---|

| VOICE CURSOR XXX SECONDS | RECORDING TIME XXX SECONDS |
|---|---|

| SOUND VOLUME | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|

0          5          10          15 SECONDS

50

152

MEMO )))

| | EXTRACT | ERASE | INSERT | MOVE | COPY | | CLOSE |
|---|---|---|---|---|---|---|---|

| VOICE CURSOR XXX SECONDS | RECORDING TIME XXX SECONDS |
|---|---|

| SOUND VOLUME | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|

0          5          10          15 SECONDS

151

55

## FIG. 25

ANALOG
VOCAL
WAVEFORM

→

14

| D/A CONVERTER | → | LATCH | → | COMPRESSION PROCESSING |

→

ENCODED
VOCAL
DATA

## FIG. 26

ANALOG
VOCAL
WAVEFORM

←

15

| A/D CONVERTER | ← | LATCH | ← | EXPANSION PROCESSING |

←

ENCODED
VOCAL
DATA

## FIG. 27

## FIG. 28

## FIG. 29

EP 0 402 911 A2

## FIG. 30

## FIG. 31A

## FIG. 31B

FIG. 32

## FIG. 33

```
                                    FROM INFORMATION
                                    PROCESSING
  280              281  ┌─────────┐  UNIT 5
   │                    │ STEREO  │  FROM SIGNAL
 TO D/A    ┌──────────┐ │REALIZING│  PROCESSOR 48
 CON-    ◄─┤MULTIPLIER-│◄┤ UNIT    │
 VERTER    │CUMULATOR  │◄└─────────┘
           └──────────┘◄┐┌─────────┐
                        ││ STEREO  │
                        └┤REALIZING│
                         │ UNIT    │
                         └─────────┘
                              282
                         ┌─────────┐
                         │ STEREO  │
                         │REALIZING│
                     283 │ UNIT    │
                         └─────────┘
```

## FIG. 34

```
         ┌ ─ ─ ─ ─ ─ ─ ─ ─ ─ 290
           292        ┌──── 291
         │  ◄╢    ┌──────┐ │
                   │    YL│
         │  XL──── │  •   │ │
                   └──293─┘
         └ ─ ─ ─ ─ ─ ─ ─ ─ ─
```

## FIG. 35

```
              292
               ◄╢──XL
                 │╲  ╲
                 │ ╲T11 ╲L
              T10│  ╲    ╲
                 ▼   ▼    ▼
               [░░]  m  m [░░]
               32-1         32-2
```

## FIG. 36

```
         ┌──────┐  11-1   ┌───────────┐       294      293
      ◄──┤FILTER│◄────────┤           │   │              │  FROM
         └──────┘  11-2   │           │◄──┐┌───────────┐ │  ACOUSTIC
      ◄──┤FILTER│◄────────┤           │   └┤   D/A     │◄┤  DATA
         └──────┘  11-3   │DISTRIBUTOR│◄───┤ CONVERTER │◄─  PROCESSING
      ◄──┤FILTER│◄────────┤           │    └───────────┘    UNIT 44
         └──────┘  11-4   │           │
      ◄──┤FILTER│◄────────┤           │
         └──────┘         └───────────┘
```